(19) **Europäisches Patentamt / European Patent Office / Office européen des brevets**

(11) **EP 4 779 973 A1**

(12) **EUROPEAN PATENT APPLICATION**
published in accordance with Art. 153(4) EPC

(43) Date of publication:
22.07.2026 Bulletin 2026/30

(21) Application number: 24865900.5

(22) Date of filing: 13.09.2024

(51) International Patent Classification (IPC):
H04N 19/107 (2014.01)     H04N 19/105 (2014.01)
H04N 19/176 (2014.01)     H04N 19/159 (2014.01)
H04N 19/117 (2014.01)     H04N 19/86 (2014.01)
H04N 19/593 (2014.01)     H04N 19/124 (2014.01)
H04N 19/18 (2014.01)      H04N 19/12 (2014.01)

(52) Cooperative Patent Classification (CPC):
H04N 19/105; H04N 19/107; H04N 19/117;
H04N 19/12; H04N 19/124; H04N 19/159;
H04N 19/176; H04N 19/18; H04N 19/593;
H04N 19/86

(86) International application number:
PCT/KR2024/013991

(87) International publication number:
WO 2025/058461 (20.03.2025 Gazette 2025/12)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 15.09.2023  US 202363538506 P

(71) Applicant: LG ELECTRONICS INC.
Yeongdeungpo-gu
Seoul 07336 (KR)

(72) Inventors:
• PARK, Naeri
  Seoul 06772 (KR)
• NAM, Junghak
  Seoul 06772 (KR)
• LIM, Jaehyun
  Seoul 06772 (KR)
• AHN, Yongjo
  Seoul 06772 (KR)
• KIM, Seunghwan
  Seoul 06772 (KR)
• CHOI, Jangwon
  Seoul 06772 (KR)
• HONG, Myungoh
  Seoul 06772 (KR)

(74) Representative: Jung, Minkyu et al
Wuesthoff & Wuesthoff
Patentanwälte und Rechtsanwalt PartG mbB
Schweigerstraße 2
81541 München (DE)

(54) **IMAGE ENCODING/DECODING METHOD, RECORDING MEDIUM HAVING BITSTREAM STORED THEREIN, AND METHOD FOR TRANSMITTING BITSTREAM**

(57)    Provided are an image encoding/decoding method, a bitstream transmission method, and a computer-readable recording medium storing a bitstream. The image decoding method according to the present disclosure comprises the steps of: generating a prediction block of the current block on the basis of a prediction mode of the current block; generating a reconstructed sample of the current block on the basis of the prediction block; and performing filtering on the reconstructed sample, wherein the step of generating the prediction block comprises the steps of: deriving a basic prediction block of the current block; deriving a multi-reference block of the current block; and generating a final prediction block of the current block by weighted-summing of the basic prediction block and the multi-reference block, and a filter strength used for the filtering is determined on the basis of prediction information related to the current block, the prediction block, or the multi-reference block.

EP 4 779 973 A1

[FIG. 8]

```
┌────────────────────────────────────┐
│  GENERATE BASIC PREDICTION BLOCK   │──S800
└────────────────────────────────────┘
                  │
                  ▼
┌────────────────────────────────────┐
│  DERIVE ADDITIONAL REFERENCE BLOCK │──S810
└────────────────────────────────────┘
                  │
                  ▼
┌────────────────────────────────────┐
│  GENERATE FINAL PREDICTION BLOCK   │──S820
└────────────────────────────────────┘
```

**Description**

[Technical Field]

The present disclosure relates to an image encoding/decoding method, a recording medium having a bitstream stored therein, and a method of transmitting a bitstream, and more particularly, to an encoding/decoding process related to multi-reference blocks.

[Background]

Recently, the demand for high-resolution and high-quality images such as HD (High Definition) images and UHD (Ultra High Definition) images has been increasing in various application fields, and accordingly, highly efficient image compression technologies are being discussed.

There are a variety of technologies such as inter-prediction technology that predicts a pixel value included in a current picture from a picture before or after a current picture with video compression technology, intra-prediction technology that predicts a pixel value included in a current picture by using pixel information in a current picture, entropy coding technology that allocates a short sign to a value with high appearance frequency and a long sign to a value with low appearance frequency, etc. and these image compression technologies may be used to effectively compress image data and transmit or store it.

Accordingly, there is a need for high-efficient image compression technology for effectively transmitting, storing and reproducing information on high-resolution and high-quality images.

[Detailed description of Invention]

[Technical Problem]

The present disclosure aims to provide an image encoding/decoding method and apparatus with improved encoding/decoding efficiency.

The present disclosure also aims to improve prediction performance when deriving a reference block in addition to a basic reference block which is derived during a prediction process.

The present disclosure also aims to improve the efficiency of an encoding/decoding process when there are multi-reference blocks.

The present disclosure also aims to provide a non-transitory computer-readable recording medium for storing a bitstream generated using an image encoding method in accordance with the present disclosure.

The present disclosure also aims to provide a method of transmitting a bitstream generated using an image encoding method in accordance with the present disclosure.

Technical objects to be achieved in the present disclosure are not limited to those described above, and other technical objects that have not been described will be clearly understood by those skilled in the technical field to which the present disclosure pertains from the following description.

[Technical Solution]

According to an embodiment of the present disclosure, an image decoding method performed by a decoding apparatus, the image decoding method includes generating a prediction block of a current block based on a prediction mode of the current block; generating a reconstructed sample the current block based on the prediction block; and performing a filtering of the reconstructed sample, wherein the generating the prediction block includes deriving a regular prediction block of the current block; deriving multiple reference blocks of the current block; and generating a final prediction block of the current block by a weighted sum of the regular prediction block and the multiple reference blocks, wherein a filter strength used for the filtering is determined based on prediction information of the current block, the prediction block or the multiple reference blocks.

According to an embodiment of the present disclosure, a method of decoding an image performed by a decoding apparatus, the method includes generating a prediction block a current block based on prediction information obtained a bitstream; deriving transform coefficients by performing dequantization based on residual information obtained the bitstream; deriving a residual block by performing inverse transform of the transform coefficients; and generating a reconstructed sample based on the prediction block and the residual block, wherein the generating a prediction block includes generating a regular prediction block of the current block; deriving multiple reference blocks of the current block; and deriving a final prediction block for a current block by a weighted sum of the regular prediction block and the multiple reference blocks, wherein whether a sub-block transform (SBT) is applied to the current block is determined based on a prediction mode of the multiple reference blocks.

According to an embodiment of the present disclosure, a method of decoding an image performed by a decoding apparatus, the method includes generating a prediction block a current block based on prediction information obtained a bitstream; deriving transform coefficients by performing dequantization based on residual information obtained the bitstream; deriving a residual block by performing an inverse transform of the transform coefficients; and generating a reconstructed sample based on the prediction block and the residual block, wherein the generating a prediction block includesgenerating a regular prediction block of the current block; deriving multiple reference blocks of the current block; and deriving a final prediction block for a current block by a weighted sum of the regular prediction block and the multiple reference blocks, wherein transform kernels used for the inverse transform are determined based on a prediction mode related to at least one of the regular prediction block and the multiple reference blocks.

According to an embodiment of the present disclosure, an image encoding method performed by an encoding apparatus, the image encoding method includes generating a prediction block of a current block based on a prediction mode of the current block; generating a reconstructed sample the current block based on the prediction block; and performing a filtering of the reconstructed sample, wherein the generating the prediction block includes deriving a regular prediction block of the current block; deriving multiple reference blocks of the current block; and generating a final prediction block of the current block by a weighted sum of the regular prediction block and the multiple reference blocks, wherein a filter strength used for the filtering is determined based on prediction information of the current block, the prediction block or the multiple reference blocks.

According to an embodiment of the present disclosure, a computer-readable digital storage medium for storing a bitstream generated using an image encoding method or apparatus.

According to an embodiment of the present disclosure, a method of transmitting data of an image includes transmitting a bitstream generated using an image encoding method or apparatus.

The features briefly summarized above regarding the present disclosure are merely illustrative aspects of the detailed description of the present disclosure described below and do not limit the scope of the present disclosure.

[Advantageous Effects]

According to the present disclosure, it is possible to provide an image encoding/decoding method and apparatus with improved encoding/decoding efficiency.

According to the present disclosure, it is also possible to improve prediction performance when deriving a reference block in addition to a basic reference block which is derived during a prediction process.

According to the present disclosure, it is also possible to improve the efficiency of an encoding/decoding process when there are multi-reference blocks for a current block.

According to the present disclosure, it is also possible to provide a non-transitory computer-readable recording medium for storing a bitstream generated using an image encoding method in accordance with the present disclosure.

According to the present disclosure, it is also possible to provide a non-transitory computer-readable recording medium for storing a bitstream that is received and decoded by an image decoding apparatus in accordance with the present disclosure and used for image reconstruction.

According to the present disclosure, it is also possible to provide a method of transmitting a bitstream generated using an image encoding method.

Effects of the present disclosure are not limited to those described above, and other effects that have not been described will be clearly understood by those skilled in the technical field to which the present disclosure pertains from the following description.

[Description of Drawings]

FIG. 1 shows a video/image coding system according to the present disclosure.

FIG. 2 shows a rough block diagram of an encoding device to which an embodiment of the present disclosure may be applied and encoding of a video/image signal is performed.

FIG. 3 shows a rough block diagram of a decoding device to which an embodiment of the present disclosure may be applied and decoding of a video/image signal is performed.

FIG. 4 is a diagram illustrating a low-frequency non-separable transform (LFNST) process.

FIG. 5 is a flowchart illustrating an inter-prediction-based video/image encoding method to which an embodiment of the present disclosure is applicable.

FIG. 6 is a flowchart illustrating an inter-prediction-based video/image decoding method to which an embodiment of the present disclosure is applicable.

FIG. 7 is a flowchart illustrating an inter-prediction procedure to which an embodiment of the present disclosure is applicable.

FIG. 8 is a flowchart illustrating an inter prediction method performed by a decoding apparatus according to an embodiment of the present disclosure.

FIG. 9 is a diagram showing examples of reference blocks used in a multi-reference block mode according to an embodiment of the present disclosure.

FIG. 10 is a flowchart illustrating a method of signaling/parsing motion information of an added prediction block according to an embodiment of the present disclosure when motion information of multi-reference blocks is signaled/parsed.

FIG. 11 shows examples of geometric partitioning mode (GPM) partitions grouped at the same angle.

FIG. 12 shows an example of generating a blended weight $w_0$ using a GPM.

FIG. 13 is a diagram illustrating top and left neighboring blocks used in combined inter and intra prediction (CIIP) weight derivation.

FIG. 14 is a set of diagrams illustrating a partitioning method for angular modes.

FIG. 15 is a set of diagrams illustrating available intra prediction mode (IPM) candidates in the GPM with inter and intra prediction.

FIG. 16 is a diagram illustrating sub-blocks at a coding unit (CU)/prediction unit (PU) boundary and sub-PUs of an advanced temporal motion vector prediction (ATMVP) mode.

FIG. 17 is a flowchart illustrating a method of parsing a CU depending on whether multi-reference blocks are applied and whether transform and residual signal information is transmitted based thereon according to an embodiment.

FIG. 18 is a flowchart illustrating a method of parsing a CU depending on whether multi-reference blocks are applied and whether a specific condition is satisfied based thereon according to an embodiment.

FIG. 19 is a flowchart illustrating a method of parsing a CU depending on whether a specific condition is satisfied when multi-reference blocks are applied, according to an embodiment.

FIG. 20 is a flowchart illustrating a method of determining boundary strength (BS) when multi-reference blocks are applied, according to an embodiment.

FIG. 21 is a diagram showing examples of a template area of a regular reference block and a template area of a multi-reference block according to an embodiment.

FIG. 22 shows an example of a contents streaming system to which embodiments of the present disclosure may be applied.

It is an example of a contents streaming system to which embodiments of the present disclosure may be applied.

[Modes of the Invention]

Since the present disclosure may make various changes and have several embodiments, specific embodiments will be illustrated in a drawing and described in detail in a detailed description. However, it is not intended to limit the present disclosure to a specific embodiment, and should be understood to include all changes, equivalents and substitutes included in the spirit and technical scope of the present disclosure. While describing each drawing, similar reference numerals are used for similar components.

A term such as first, second, etc. may be used to describe various components, but the components should not be limited by the terms. The terms are used only to distinguish one component from other components. For example, a first component may be referred to as a second component without departing from the scope of a right of the present disclosure, and similarly, a second component may also be referred to as a first component. A term of and/or includes any of a plurality of related stated items or a combination of a plurality of related stated items.

When a component is referred to as "being connected" or "being linked" to another component, it should be understood that it may be directly connected or linked to another component, but another component may exist in the middle. On the other hand, when a component is referred to as "being directly connected" or "being directly linked" to another component, it should be understood that there is no another component in the middle.

A term used in this application is just used to describe a specific embodiment, and is not intended to limit the present disclosure. Singular expressions include plural expressions unless the context clearly dictates otherwise. In this application, it should be understood that a term such as "include" or "have", etc. is intended to designate the presence of features, numbers, steps, operations, components, parts or combinations thereof described in the specification, but does not exclude in advance the possibility of presence or addition of one or more other features, numbers, steps, operations, components, parts or combinations thereof.

The present disclosure relates to video/image coding. For example, a method/an embodiment disclosed herein may be applied to a method disclosed in the versatile video coding (VVC) standard. In addition, a method/an embodiment disclosed herein may be applied to a method disclosed in the essential video coding (EVC) standard, the AOMedia Video 1 (AV1) standard, the 2nd generation of audio video coding standard (AVS2) or the next-generation video/image coding standard (ex. H.267 or H.268, etc.).

This specification proposes various embodiments of video/image coding, and unless otherwise specified, the embodiments may be performed in combination with each other.

Herein, a video may refer to a set of a series of images over time. A picture generally refers to a unit representing one image in a specific time period, and a slice/a tile is a unit that forms part of a picture in coding. A slice/a tile may include at least one coding tree unit (CTU). One picture may consist of at least one slice/tile. One tile is a rectangular area composed of a plurality of CTUs within a specific tile column and a specific tile row of one picture. A tile column is a rectangular area of CTUs having the same height as that of a picture and a width designated by a syntax requirement of a picture parameter set. A tile row is a rectangular area of CTUs having a height designated by a picture parameter set and the same width as that of a picture. CTUs within one tile may be arranged consecutively according to CTU raster scan, while tiles within one picture may be arranged consecutively according to raster scan of a tile. One slice may include an integer number of complete tiles or an integer number of consecutive complete CTU rows within a tile of a picture that may be included exclusively in a single NAL unit. Meanwhile, one picture may be divided into at least two sub-pictures. A sub-picture may be a rectangular area of at least one slice within a picture.

A pixel, a pixel or a pel may refer to the minimum unit that constitutes one picture (or image). In addition, 'sample' may be used as a term corresponding to a pixel. A sample may generally represent a pixel or a pixel value, and may represent only a pixel/a pixel value of a luma component, or only a pixel/a pixel value of a chroma component.

A unit may represent a basic unit of image processing. A unit may include at least one of a specific area of a picture and information related to a corresponding area. One unit may include one luma block and two chroma (ex. cb, cr) blocks. In some cases, a unit may be used interchangeably with a term such as a block or an area, etc. In a general case, a $M \times N$ block may include a set (or an array) of transform coefficients or samples (or sample arrays) consisting of M columns and N rows.

Herein, "A or B" may refer to "only A", "only B" or "both A and B." In other words, herein, "A or B" may be interpreted as "A and/or B." For example, herein, "A, B or C" may refer to "only A", "only B", "only C" or "any combination of A, B and C)".

A slash (/) or a comma used herein may refer to "and/or." For example, "A/B" may refer to "A and/or B." Accordingly, "A/B" may refer to "only A", "only B" or "both A and B." For example, "A, B, C" may refer to "A, B, or C".

Herein, "at least one of A and B" may refer to "only A", "only B" or "both A and B". In addition, herein, an expression such as "at least one of A or B" or "at least one of A and/or B" may be interpreted in the same way as "at least one of A and B".

In addition, herein, "at least one of A, B and C" may refer to "only A", "only B", "only C", or "any combination of A, B and C". In addition, "at least one of A, B or C" or "at least one of A, B and/or C" may refer to "at least one of A, B and C".

In addition, a parenthesis used herein may refer to "for example." Specifically, when indicated as "prediction (intra prediction)", "intra prediction" may be proposed as an example of "prediction". In other words, "prediction" herein is not limited to "intra prediction" and "intra prediction" may be proposed as an example of "prediction." In addition, even when indicated as "prediction (i.e., intra prediction)", "intra prediction" may be proposed as an example of "prediction."

Herein, a technical feature described individually in one drawing may be implemented individually or simultaneously.

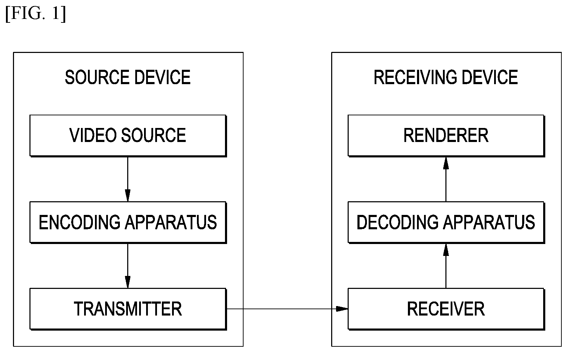

FIG. 1 shows a video/image coding system according to the present disclosure.

Referring to FIG. 1, a video/image coding system may include a first device (a source device) and a second device (a receiving device).

A source device may transmit encoded video/image information or data in a form of a file or streaming to a receiving device through a digital storage medium or a network. The source device may include a video source, an encoding device and a transmission unit. The receiving device may include a reception unit, a decoding device and a renderer. The encoding device may be referred to as a video/image encoding device and the decoding device may be referred to as a video/image decoding device. A transmitter may be included in an encoding device. A receiver may be included in a decoding device. A renderer may include a display unit, and a display unit may be composed of a separate device or an external component.

A video source may acquire a video/an image through a process of capturing, synthesizing or generating a video/an image. A video source may include a device of capturing a video/an image and a device of generating a video/an image. A device of capturing a video/an image may include at least one camera, a video/image archive including previously captured videos/images, etc. A device of generating a video/an image may include a computer, a tablet, a smartphone, etc. and may (electronically) generate a video/an image. For example, a virtual video/image may be generated through a computer, etc., and in this case, a process of capturing a video/an image may be replaced by a process of generating related data.

An encoding device may encode an input video/image. An encoding device may perform a series of procedures such as prediction, transform, quantization, etc. for compression and coding efficiency. Encoded data (encoded video/-image information) may be output in a form of a bitstream.

A transmission unit may transmit encoded video/image information or data output in a form of a bitstream to a reception unit of a receiving device through a digital storage medium or a network in a form of a file or streaming. A digital storage medium may include various storage media such as USB, SD, CD, DVD, Blu-ray, HDD, SSD, etc. A transmission unit may include an element for generating a media file through a predetermined file format and may include an element for transmission through a broadcasting/communication network. A reception unit may receive/extract the bitstream and transmit it to a decoding device.

A decoding device may decode a video/an image by performing a series of procedures such as dequantization, inverse transform, prediction, etc. corresponding to an operation of an encoding device.

A renderer may render a decoded video/image. A rendered video/image may be displayed through a display unit.

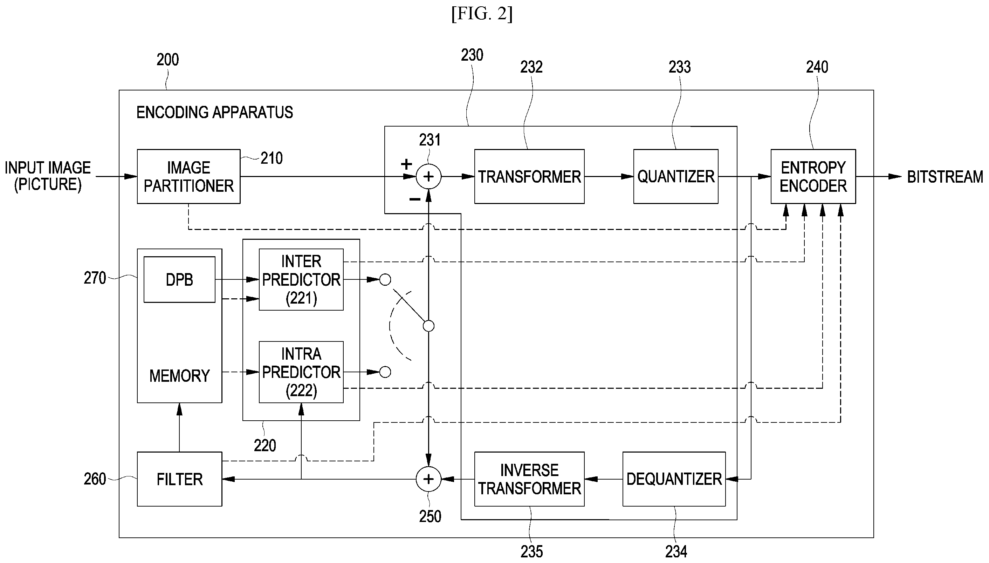

FIG. 2 shows a rough block diagram of an encoding device to which an embodiment of the present disclosure may be applied and encoding of a video/image signal is performed.

Referring to FIG. 2, an encoding device 200 may be composed of an image partitioner 210, a predictor 220, a residual processor 230, an entropy encoder 240, an adder 250, a filter 260 and a memory 270. A predictor 220 may include an inter predictor 221 and an intra predictor 222. A residual processor 230 may include a transformer 232, a quantizer 233, a dequantizer 234 and an inverse transformer 235. A residual processor 230 may further include a subtractor 231. An adder 250 may be referred to as a reconstructor or a reconstructed block generator. The above-described image partitioner 210, predictor 220, residual processor 230, entropy encoder 240, adder 250 and filter 260 may be configured by at least one hardware component (e.g., an encoder chipset or a processor) according to an embodiment. In addition, a memory 270 may include a decoded picture buffer (DPB) and may be configured by a digital storage medium. The hardware component may further include a memory 270 as an internal/external component.

An image partitioner 210 may partition an input image (or picture, frame) input to an encoding device 200 into at least one processing unit. As an example, the processing unit may be referred to as a coding unit (CU). In this case, a coding unit may be partitioned recursively according to a quad-tree binary-tree ternary-tree (QTBTTT) structure from a coding tree unit (CTU) or the largest coding unit (LCU).

For example, one coding unit may be partitioned into a plurality of coding units with a deeper depth based on a quad tree structure, a binary tree structure and/or a ternary structure. In this case, for example, a quad tree structure may be applied first and a binary tree structure and/or a ternary structure may be applied later. Alternatively, a binary tree structure may be applied before a quad tree structure. A coding procedure according to this specification may be performed based on a final coding unit that is no longer partitioned. In this case, based on coding efficiency, etc. according to an image characteristic, the largest coding unit may be directly used as a final coding unit, or if necessary, a coding unit may be recursively partitioned into coding units of a deeper depth, and a coding unit with an optimal size may be used as a final coding unit. Here, a coding procedure may include a procedure such as prediction, transform, and reconstruction, etc. described later.

As another example, the processing unit may further include a prediction unit (PU) or a transform unit (TU). In this case, the prediction unit and the transform unit may be divided or partitioned from a final coding unit described above, respectively. The prediction unit may be a unit of sample prediction, and the transform unit may be a unit for deriving a transform coefficient and/or a unit for deriving a residual signal from a transform coefficient.

In some cases, a unit may be used interchangeably with a term such as a block or an area, etc. In a general case, a M×N block may represent a set of transform coefficients or samples consisting of M columns and N rows. A sample may generally represent a pixel or a pixel value, and may represent only a pixel/a pixel value of a luma component, or only a pixel/a pixel value of a chroma component. A sample may be used as a term that makes one picture (or image) correspond to a pixel or a pel.

An encoding device 200 may subtract a prediction signal (a prediction block, a prediction sample array) output from an inter predictor 221 or an intra predictor 222 from an input image signal (an original block, an original sample array) to generate a residual signal (a residual signal, a residual sample array), and a generated residual signal is transmitted to a transformer 232. In this case, a unit that subtracts a prediction signal (a prediction block, a prediction sample array) from an input image signal (an original block, an original sample array) within an encoding device 200 may be referred to as a subtractor 231.

A predictor 220 may perform prediction on a block to be processed (hereinafter, referred to as a current block) and generate a predicted block including prediction samples for the current block. A predictor 220 may determine whether intra prediction or inter prediction is applied in a unit of a current block or a CU. A predictor 220 may generate various information on prediction such as prediction mode information, etc. and transmit it to an entropy encoder 240 as described later in a description of each prediction mode. Information on prediction may be encoded in an entropy encoder 240 and output in a form of a bitstream.

An intra predictor 222 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. A nondirectional mode may include at least one of a DC mode or a planar mode. A directional mode may include 33 directional modes or 65 directional modes according to a detail level of a prediction direction. However, it is an example, and more or less directional modes may be used according to a configuration. An intra predictor 222 may determine a prediction mode applied to a current block by using a prediction mode applied to a neighboring block.

An inter predictor 221 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. A reference picture including the reference block and a reference picture including the temporal neighboring block may be the same or different. The temporal neighboring block may be referred to as a collocated reference block, a collocated CU (colCU), etc., and a reference picture including the temporal neighboring block may be referred to as a collocated picture (colPic). For example, an inter predictor 221 may configure a motion information candidate list based on neighboring blocks and generate information indicating which candidate is used to derive a motion vector and/or a reference picture index of the current block. Inter prediction may be performed based on various prediction modes, and for example, for a skip mode and a merge mode, an inter predictor 221 may use motion information of a neighboring block as motion information of a current block. For a skip mode, unlike a merge mode, a residual signal may not be transmitted. For a motion vector prediction (MVP) mode, a motion vector of a surrounding block is used as a motion vector predictor and a motion vector difference is signaled to indicate a motion vector of a current block.

A predictor 220 may generate a prediction signal based on various prediction methods described later. For example, a predictor may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, a sample value within a picture may be signaled based on information on a palette table and a palette index. A prediction signal generated through the predictor 220 may be used to generate a reconstructed signal or a residual signal.

A transformer 232 may generate transform coefficients by applying a transform technique to a residual signal. For example, a transform technique may include at least one of Discrete Cosine Transform (DCT), Discrete Sine Transform (DST), Karhunen-Loève Transform (KLT), Graph-Based Transform (GBT) or Conditionally Non-linear Transform (CNT). Here, GBT refers to transform obtained from this graph when relationship information between pixels is expressed as a graph. CNT refers to transform obtained based on generating a prediction signal by using all previously reconstructed pixels. In addition, a transform process may be applied to a square pixel block in the same size or may be applied to a non-square block in a variable size.

A quantizer 233 may quantize transform coefficients and transmit them to an entropy encoder 240 and an entropy encoder 240 may encode a quantized signal (information on quantized transform coefficients) and output it as a bitstream. Information on the quantized transform coefficients may be referred to as residual information. A quantizer 233 may rearrange quantized transform coefficients in a block form into an one-dimensional vector form based on coefficient scan order, and may generate information on the quantized transform coefficients based on the quantized transform coefficients in the one-dimensional vector form.

An entropy encoder 240 may perform various encoding methods such as exponential Golomb, context-adaptive variable length coding (CAVLC), context-adaptive binary arithmetic coding (CABAC), etc. An entropy encoder 240 may encode information necessary for video/image reconstruction (e.g., a value of syntax elements, etc.) other than quantized transform coefficients together or separately.

Encoded information (ex. encoded video/image information) may be transmitted or stored in a unit of a network abstraction layer (NAL) unit in a bitstream form. The video/image information may further include information on various parameter sets such as an adaptation parameter set (APS), a picture parameter set (PPS), a sequence parameter set (SPS) or a video parameter set (VPS), etc. In addition, the video/image information may further include general constraint information. Herein, information and/or syntax elements transmitted/signaled from an encoding device to a decoding device may be included in video/image information. The video/image information may be encoded through the above-described encoding procedure and included in the bitstream. The bitstream may be transmitted through a network or may be stored in a digital storage medium. Here, a network may include a broadcasting network and/or a communication network, etc. and a digital storage medium may include various storage media such as USB, SD, CD, DVD, Blu-ray, HDD, SSD, etc. A transmission unit (not shown) for transmitting and/or a storage unit (not shown) for storing a signal output from an entropy encoder 240 may be configured as an internal/external element of an encoding device 200, or a transmission unit may be also included in an entropy encoder 240.

Quantized transform coefficients output from a quantizer 233 may be used to generate a prediction signal. For example, a residual signal (a residual block or residual samples) may be reconstructed by applying dequantization and inverse transform to quantized transform coefficients through a dequantizer 234 and an inverse transformer 235. An adder 250 may add a reconstructed residual signal to a prediction signal output from an inter predictor 221 or an intra predictor 222 to generate a reconstructed signal (a reconstructed picture, a reconstructed block, a reconstructed sample array). When there is no residual for a block to be processed like when a skip mode is applied, a predicted block may be used as a reconstructed block. An adder 250 may be referred to as a reconstructor or a reconstructed block generator. A generated reconstructed signal may be used for intra prediction of a next block to be processed within a current picture, and may be also used for inter prediction of a next picture through filtering as described later. Meanwhile, luma mapping with chroma scaling (LMCS) may be applied in a picture encoding and/or reconstruction process.

A filter 260 may improve subjective/objective image quality by applying filtering to a reconstructed signal. For example, a filter 260 may generate a modified reconstructed picture by applying various filtering methods to a reconstructed picture, and may store the modified reconstructed picture in a memory 270, specifically in a DPB of a memory 270. The various filtering methods may include deblocking filtering, sample adaptive offset, adaptive loop filter, bilateral filter, etc. A filter 260 may generate various information on filtering and transmit it to an entropy encoder 240. Information on filtering may be encoded in an entropy encoder 240 and output in a form of a bitstream.

A modified reconstructed picture transmitted to a memory 270 may be used as a reference picture in an inter predictpr 221. When inter prediction is applied through it, an encoding device may avoid prediction mismatch in an encoding device 200 and a decoding device, and may also improve encoding efficiency.

A DPB of a memory 270 may store a modified reconstructed picture to use it as a reference picture in an inter predictor 221. A memory 270 may store motion information of a block from which motion information in a current picture is derived (or encoded) and/or motion information of blocks in a pre-reconstructed picture. The stored motion information may be transmitted to an inter predictor 221 to be used as motion information of a spatial neighboring block or motion information of a temporal neighboring block. A memory 270 may store reconstructed samples of reconstructed blocks in a current picture and transmit them to an intra predictor 222.

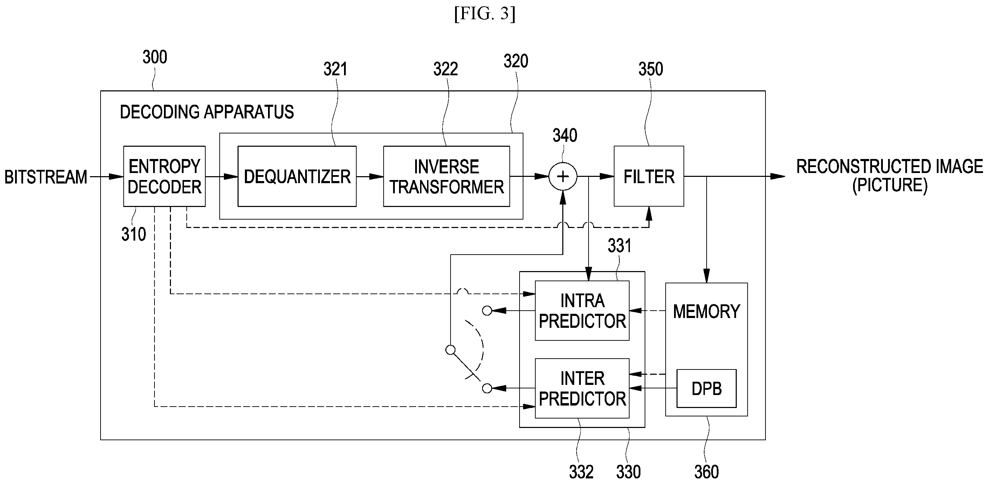

FIG. 3 shows a rough block diagram of a decoding device to which an embodiment of the present disclosure may be applied and decoding of a video/image signal is performed.

Referring to FIG. 3, a decoding device 300 may be configured by including an entropy decoder 310, a residual processor 320, a predictor 330, an adder 340, a filter 350 and a memory 360. A predictor 330 may include an inter predictor 332 and an intra predictor 331. A residual processor 320 may include a dequantizer 321 and an inverse transformer 321.

According to an embodiment, the above-described entropy decoder 310, residual processor 320, predictor 330, adder 340 and filter 350 may be configured by one hardware component (e.g., a decoder chipset or a processor). In addition, a memory 360 may include a decoded picture buffer (DPB) and may be configured by a digital storage medium. The hardware component may further include a memory 360 as an internal/external component.

When a bitstream including video/image information is input, a decoding device 300 may reconstruct an image in response to a process in which video/image information is processed in an encoding device of FIG. 2. For example, a decoding device 300 may derive units/blocks based on block partition-related information obtained from the bitstream. A decoding device 300 may perform decoding by using a processing unit applied in an encoding device. Accordingly, a processing unit of decoding may be a coding unit, and a coding unit may be partitioned from a coding tree unit or the large coding unit according to a quad tree structure, a binary tree structure and/or a ternary tree structure. At least one transform unit may be derived from a coding unit. And, a reconstructed image signal decoded and output through a decoding device 300 may be played through a playback device.

A decoding device 300 may receive a signal output from an encoding device of FIG. 2 in a form of a bitstream, and a received signal may be decoded through an entropy decoder 310. For example, an entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS) or a video parameter set (VPS), etc. In addition, the video/image information may further include general constraint information. A decoding device may decode a picture further based on information on the parameter set and/or the general constraint information. Signaled/received information and/or syntax elements described later herein may be decoded through the decoding procedure and obtained from the bitstream. For example, an entropy decoder 310 may decode information in a bitstream based on a coding method such as exponential Golomb encoding, CAVLC, CABAC, etc. and output a value of a syntax element necessary for image reconstruction and quantized values of a transform coefficient regarding a residual. In more detail, a CABAC entropy decoding method may receive a bin corresponding to each syntax element from a bitstream, determine a context model by using syntax element information to be decoded, decoding information of a surrounding block and a block to be decoded or information of a symbol/a bin decoded in a previous step, perform arithmetic decoding of a bin by predicting a probability of occurrence of a bin according to a determined context model and generate a symbol corresponding to a value of each syntax element. In this case, a CABAC entropy decoding method may update a context model by using information on a decoded symbol/bin for a context model of a next symbol/bin after determining a context model. Among information decoded in an entropy decoder 310, information on prediction is provided to a predictor (an inter predictor 332 and an intra predictor 331), and a residual value on which entropy decoding was performed in an entropy decoder 310, i.e., quantized transform coefficients and related parameter information may be input to a residual processor 320. A residual processor 320 may derive a residual signal (a residual block, residual samples, a residual sample array). In addition, information on filtering among information decoded in an entropy decoder 310 may be provided to a filter 350. Meanwhile, a reception unit (not shown) that receives a signal output from an encoding device may be further configured as an internal/external element of a decoding device 300 or a reception unit may be a component of an entropy decoder 310.

Meanwhile, a decoding device according to this specification may be referred to as a video/image/picture decoding device, and the decoding device may be divided into an information decoder (a video/image/picture information decoder) and a sample decoder (a video/image/picture sample decoder). The information decoder may include the entropy decoder 310 and the sample decoder may include at least one of dequantizer 321, the inverse transformer 322, the adder 340, the filter 350, the memory 360, the inter predictor 332 and the intra predictor 331.

A dequantizer 321 may dequantize quantized transform coefficients and output transform coefficients. A dequantizer 321 may rearrange quantized transform coefficients into a two-dimensional block form. In this case, the rearrangement may be performed based on coefficient scan order performed in an encoding device. A dequantizer 321 may perform dequantization on quantized transform coefficients by using a quantization parameter (e.g., quantization step size information) and obtain transform coefficients.

An inverse transformer 322 inversely transforms transform coefficients to obtain a residual signal (a residual block, a residual sample array).

A predictor 320 may perform prediction on a current block and generate a predicted block including prediction samples for the current block. A predictor 320 may determine whether intra prediction or inter prediction is applied to the current block based on the information on prediction output from an entropy decoder 310 and determine a specific intra/inter prediction mode.

A predictor 320 may generate a prediction signal based on various prediction methods described later. For example, a predictor 320 may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, information on a palette table and a palette index may be included in the video/image information and signaled.

An intra predictor 331 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. An intra predictor 331 may determine a prediction mode applied to a current block by using a prediction mode applied to a neighboring block.

An inter predictor 332 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. For example, an inter predictor 332 may configure a motion information candidate list based on neighboring blocks and derive a motion vector and/or a reference picture index of the current block based on received candidate selection information. Inter prediction may be performed based on various prediction modes, and the information on prediction may include information indicating an inter prediction mode for the current block.

An adder 340 may add an obtained residual signal to a prediction signal (a prediction block, a prediction sample array) output from a predictor (including an inter predictor 332 and/or an intra predictor 331) to generate a reconstructed signal (a reconstructed picture, a reconstructed block, a reconstructed sample array). When there is no residual for a block to be processed like when a skip mode is applied, a prediction block may be used as a reconstructed block.

An adder 340 may be referred to as a reconstructor or a reconstructed block generator. A generated reconstructed signal may be used for intra prediction of a next block to be processed in a current picture, may be output through filtering as described later or may be used for inter prediction of a next picture. Meanwhile, luma mapping with chroma scaling (LMCS) may be applied in a picture decoding process.

A filter 350 may improve subjective/objective image quality by applying filtering to a reconstructed signal. For example, a filter 350 may generate a modified reconstructed picture by applying various filtering methods to a reconstructed picture and transmit the modified reconstructed picture to a memory 360, specifically a DPB of a memory 360. The various filtering methods may include deblocking filtering, sample adaptive offset, adaptive loop filter, bilateral filter, etc.

The (modified) reconstructed picture stored in the DPB of the memory 360 can be used as a reference picture in the inter prediction unit 332. A memory 360 may store motion information of a block from which motion information in a current picture is derived (or decoded) and/or motion information of blocks in a pre-reconstructed picture. The stored motion information may be transmitted to an inter predictor 332 to be used as motion information of a spatial neighboring block or motion information of a temporal neighboring block. A memory 360 may store reconstructed samples of reconstructed blocks in a current picture and transmit them to an intra predictor 331.

Herein, embodiments described in a filter 260, an inter predictor 221 and an intra predictor 222 of an encoding device 200 may be also applied equally or correspondingly to a filter 350, an inter predictor 332 and an intra predictor 331 of a decoding device 300, respectively.

Transform/inverse transform will be described in detail below.

The encoding apparatus 200 may derive a residual block (residual samples) on the basis of a block predicted through intra/inter/intra block copy (IBC) prediction, etc., and derive quantized transform coefficients by applying transform and quantization to the derived residual samples. Information on the quantized transform coefficients (residual information) may be included in residual coding syntax, encoded, and then output in the form of a bitstream. The decoding apparatus 300 may acquire the information on the quantized transform coefficients (residual information) from the bitstream and derive the quantized transform coefficients by decoding the information. The decoding apparatus 300 may derive the residual samples through dequantization/inverse transform based on the quantized transform coefficients. As described above, at least one of quantization/dequantization and/or transform/inverse transform may be omitted. When transform/inverse transform is omitted, transform coefficients may also be referred to as "coefficients" or "residual coefficients," or it may still be referred to as "transform coefficient" for consistency of expression. Whether transform/inverse transform is omitted may be signaled on the basis of transform_skip_flag.

Transform/inverse transform may be performed on the basis of a transform kernel. For example, according to the present document, multiple transform selection (MTS) scheme may be applied. In this case, some of multiple transform kernel sets may be selected and applied to a current block. Transform kernels may be referred to by various terms such as "transform matrix," "transform type," and the like. For example, a transform kernel set may be a combination of a vertical-direction transform kernel (vertical transform kernel) and a horizontal-direction transform kernel (horizontal transform kernel).

For example, MTS index information (or the syntax element "tu_mts_idx") may be generated/encoded by the encoding apparatus 200 to indicate one of transform kernel sets and signaled to the decoding apparatus 300. For example, transform kernel sets in accordance with a value of MTS index information may be derived as shown in Table 1 below.

[Table 1]

| tu_mts_idx[ x0 ][ y0 ] | 0 | 1 | 2 | 3 | 4 |
|---|---|---|---|---|---|
| trTypeHor | 0 | 1 | 2 | 1 | 2 |
| trTypeVer | 0 | 1 | 1 | 2 | 2 |

Table 1 shows description of trTypeHor and trTypeVer based on tu_mtx_idx[x][y].

Transform kernel sets may be determined on the basis of, for example, cu_sbt_horizontal_flag and cu_sbt_pos_flag.

cu_sbt_horizontal_flag having a value of 1 may represent that a current CU is horizontally divided into two TUs. cu_sbt_horizontal_flag[x0][y0] having a value of 0 may represent that the current CU is vertically divided into two TUs. cu_sbt_pos_flag having a value of 1 may represent that tu_cbf_luma, tu_cbf_cb, and tu_cbf_cr of a first TU in the current CU do not exist in the bitstream. cu_sbt_pos_flag having a value of 0 may represent that tu_cbf_luma, tu_cbf_cb, and tu_cbf_cr of a second TU in the current CU do not exist in the bitstream.

[Table 2]

| cu_sbt_horizontal_flag | cu_sbt_pos_flag | trTypeHor | trTypeVer |
|---|---|---|---|
| 0 | 0 | 2 | 1 |

(continued)

| cu_sbt_horizontal_flag | cu_sbt_pos_flag | trTypeHor | trTypeVer |
|---|---|---|---|
| 0 | 1 | 1 | 1 |
| 1 | 0 | 1 | 2 |
| 1 | 1 | 1 | 1 |

Table 2 shows description of trTypeHor and trTypeVer based on cu_sbt_horizontal flag and cu_sbt_pos_flag.
A transform kernel set may be determined on the basis of, for example, an intra prediction mode (IPM) for the current block.

[Table 3]

| predModeIntra | trTypeHor | trTypeVer |
|---|---|---|
| INTRA_PLANAR, INTRA_ANGULAR31, INTRA_ANGULAR32, INTRA_ANGULAR34, INTRA_ANGULAR36, INTRA_ANGULAR37 | ( nTbW >= 4 && nTbW <= 16 ) ? 1 : 0 | ( nTbH >= 4 && nTbH <= 16 ) ? 1 : 0 |
| INTRA_ANGULAR33, INTRA_ANGULAR35 | 0 | 0 |
| INTRA_ANGULAR2, INTRA_ANGULAR4,...,INTRA_ANGULAR28, INTRA_ANGULAR30, INTRA_ANGULAR39, INTRA_ANGULAR41,...,INTRA_ANGULAR63, INTRA_ANGULAR65 | ( nTbW >= 4 && nTbW <= 16 ) ? 1 : 0 | 0 |
| INTRA_ANGULAR3, INTRA_ANGULAR5,..., INTRA_ANGULAR27, INTRA_ANGULAR29, INTRA_ANGULAR38, INTRA_ANGULARA40,...,INTRA_ANGULAR64, INTRA ANGULAR66 | 0 | (nTbH >= 4 && nTbH <= 16 ) ? 1 : 0 |

In the tables (Tables 1 to 3), trTypeHor may indicate a horizontal-direction transform kernel, and trTypeVer may indicate a vertical-direction transform kernel. Here, a trTypeHor/trTypeVer value of 0 may indicate DCT2, a trTypeHor/trTypeVer value of 1 may indicate DCT7, and a trTypeHor/trTypeVer value of 2 may indicate DCT8. However, these are illustrative, and other values may be mapped to other DCT/DST according to predetermined rules.
Table 4 below shows examples of basis functions for the foregoing DCT2, DCT8, and DST7.

[Table 4]

| Transform Type | Basis function $T_i(i)$, $i, j = N-$ |
|---|---|
| DCT-II | $T_i(j) = \omega_0 \cdot \sqrt{\dfrac{2}{N}} \cdot \cos\left(\dfrac{\pi \cdot i \cdot (2j+1)}{2N}\right)$ where, $\omega_0 = \begin{cases} \sqrt{\dfrac{2}{N}} & i = 0 \\ 1 & i \neq 0 \end{cases}$ |
| DCT-VIII | $T_i(j) = \sqrt{\dfrac{4}{2N+1}} \cdot \cos\left(\dfrac{\pi \cdot (2i+1) \cdot (2j-1)}{4N+2}\right)$ $T_i(j) = \sqrt{\dfrac{4}{2N+1}} \cdot \sin\left(\dfrac{\pi \cdot (2i+1) \cdot (j+1)}{2N+1}\right)$ |
| DST-VII | $T_i(j) = \sqrt{\dfrac{4}{2N+1}} \cdot \sin\left(\dfrac{\pi \cdot (2i+1) \cdot (j+1)}{2N+1}\right)$ |

In the present document, MTS-based transform may be applied as primary transform, and secondary transform may be further applied. Secondary transform may be only applied to coefficients of a top-left w×h area of a coefficient block to which primary transform has been applied, and may be referred to as "reduced secondary transform (RST)." For example, w and/or h may be 4 or 8. In the case of transform, primary transform and secondary transform may be sequentially applied to a residual block, and in the case of inverse transform, secondary inverse transform and primary inverse transform may be sequentially applied to transform coefficients. Secondary transform (RST transform) may be referred to as "low frequency coefficients transform (LFCT)" or "low frequency non-separable transform (LFNST)." Secondary inverse transform may be referred to as "inverse LFCT" or "inverse LFNST."

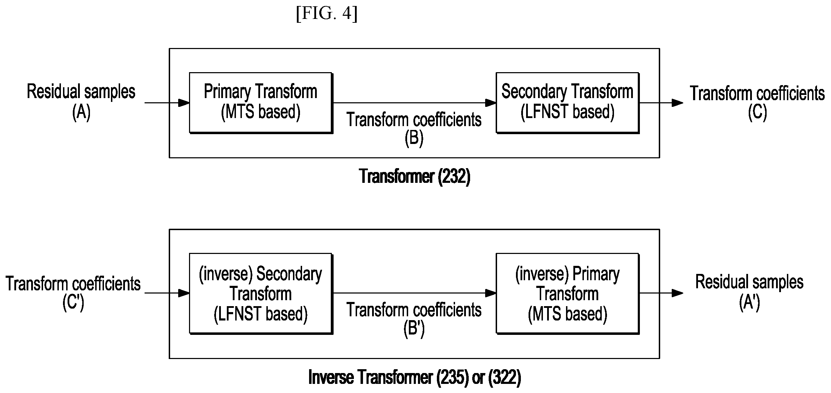

FIG. 4 is a diagram illustrating an LFNST process.

As shown in FIG. 4, LFNST is known as RST applied between forward primary transform and quantization (in an encoder) and between dequantization and inverse primary transform (in a decoder). In LFNST, 4×4 non-separable transform or 8×8 non-separable transform may be applied in accordance with block size. For example, 4×4 LFNST may be applied to small blocks (i.e., min(width, height) < 8), and 8×8 LFNST may be applied to large blocks (i.e., min(width, height) > 4).

Application of non-separable transform used in LFNST may be described as follows. To apply 4×4 LFNST a 4×4 input block X may be represented like a vector $\vec{X}$ as shown in Equation 1 below.

[Equation 1]

$$X = \begin{bmatrix} X_{00} & X_{01} & X_{02} & X_{03} \\ X_{10} & X_{11} & X_{12} & X_{13} \\ X_{20} & X_{21} & X_{22} & X_{23} \\ X_{30} & X_{31} & X_{32} & X_{33} \end{bmatrix}$$

$$\vec{X} = [X_{00}\ X_{01}\ X_{02}\ X_{03}\ X_{10}\ X_{11}\ X_{12}\ X_{13}\ X_{20}\ X_{21}\ X_{22}\ X_{23}\ X_{30}\ X_{31}\ X_{32}\ X_{33}]^T$$

Non-separable transform may be calculated using $\vec{F} = T \cdot \vec{X}$. Here, $\vec{F}$ may be a transform coefficient vector, and T may be a 16×16 transform matrix. The 16×1 coefficient vector $\vec{F}$ may be reconfigured later as a 4×4 block using a scan order (horizontal, vertical, or diagonal line) of a corresponding block. Coefficients with smaller indices may be disposed with smaller scan indices in a 4×4 coefficient block.

Transform/inverse transform may be performed in CU or TU units. In other words, transform/inverse transform may be applied to residual samples in a CU or residual samples in a TU. A CU size may be the same as a TU size, or a plurality of Tus may exist in a CU area. Meanwhile, a CU size may generally indicate a luma component (sample) coding block (CB) size. A TU size may generally indicate a luma component (sample) TB size. A chroma component (sample) CB or TB size may be derived on the basis of a luma component (sample) CB or TB size in accordance with a component ratio (e.g., 4:4:4, 4:2:2: 4:2:0, etc.) of a color format (chroma format). A TU size may be derived on the basis of maxTbSize. For example, when a CU size is larger than maxTbSize, a plurality of maxTbSize TUs (TBs) may be derived from the CU, and transform/inverse transform may be performed in TU (TB) units. maxTbSize may be considered in determining whether to apply various types of intra prediction such as intra sub-partition prediction (ISP) and the like. Information on maxTbSize may be predetermined or may be generated and encoded by the encoding apparatus 200 and signaled to the decoding apparatus 300.

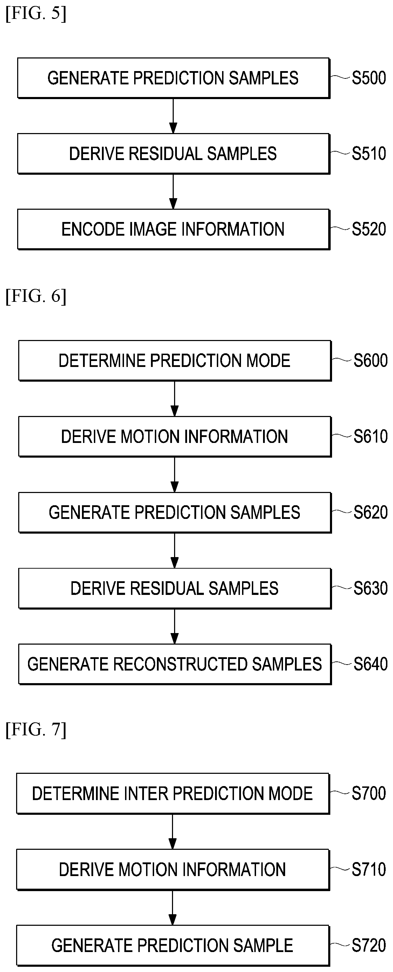

FIG. 5 is a flowchart illustrating an inter-prediction-based video/image encoding method to which an embodiment of the present disclosure is applicable.

The encoding apparatus 200 may perform inter-prediction on a current block (S500). The encoding apparatus 200 may derive an inter prediction mode and motion information of the current block and generate prediction samples for the current block. Here, an inter-prediction mode determination procedure, a motion information derivation procedure, and a prediction sample generation procedure may be simultaneously performed, or any one procedure may be performed before others. For example, the inter predictor 221 of the encoding apparatus 200 may include a prediction mode determiner, a motion information deriver, and a prediction sample deriver. The prediction mode determiner may determine a prediction mode for the current block, the motion information deriver may derive motion information of the current block, and the prediction sample deriver may derive prediction samples for the current block.

The inter predictor 221 of the encoding apparatus 200 may search for a block similar to the current block within a specific area (search area) of reference pictures through motion estimation and derive a reference block whose difference from the current block is the smallest or a certain threshold or less. The inter predictor 221 may derive a reference picture index indicating a reference picture where a reference block is present on the basis of the reference block and derive a motion vector on the basis of a positional difference between the reference block and the current block. The encoding apparatus 200 may determine a prediction mode applied to the current block among various prediction modes. The encoding apparatus 200 may compare rate distortion (RD) costs of various prediction modes and determine an optimal prediction mode for the current block.

When a merge mode is applied to the current block, the encoding apparatus 200 may generate a merge candidate list which will be described below, and derive a reference block whose inter-sample difference, that is, sum of absolute differences (SAD) or sum of absolute transformed differences (SATD), from the current block is the smallest or a certain threshold or less among reference blocks indicated by merge candidates included in the merge candidate list. In this case, a merge candidate related to the derived reference block may be selected, and merge index information indicating the selected merge candidate may be generated and signaled to the decoding apparatus 300. The encoding apparatus 200 may derive motion information of the current block using motion information of the selected merge candidate.

When a skip mode is applied to the current block, motion information of the current block may be derived in the same manner as the foregoing case where the merge mode is applied. However, when the skip mode is applied, a residual signal for the corresponding block is omitted, and the prediction samples may be directly used as reconstructed samples.

As another example, when an advanced (A)MVP mode is applied to the current block, the encoding apparatus 200 may generate an (A)MVP list which will be described below, and use an MVP candidate selected from among MVP candidates included in the (A)MVP candidate list as an MVP of the current block. In this case, a motion vector indicating the reference block derived through the foregoing motion estimation may be used as a motion vector of the current block. The encoding apparatus 200 may determine an MVP candidate having a motion vector whose difference from the motion vector of the current block is the smallest among the MVP candidates as a selected MVP candidate. The encoding apparatus 200 may derive a motion vector difference (MVD) which is a difference obtained by subtracting the MVP from the motion vector of the current block. Information on the MVD may be signaled to the decoding apparatus 300. Also, when the (A)MVP mode is applied, a reference picture index value may constitute reference picture index information which is signaled to the separate decoding apparatus 300.

The encoding apparatus 200 may derive residual samples on the basis of the prediction samples (S510). The encoding apparatus 200 may derive residual samples by comparing original samples and prediction samples for the current block.

The encoding apparatus 200 may encode image information including the prediction information and the residual information (S520). The encoding apparatus 200 may output the encoded image information in the form of a bitstream. The prediction information may be information related to the prediction procedure and may include prediction mode information (e.g., a skip flag, a merge flag, a merge index, etc.) and/or motion information. The motion information may include candidate selection information (e.g., the merge index, an MVP flag, or an MVP index) which is information for deriving a motion vector. Also, the motion information may include the foregoing MVD information and/or reference picture index information. Further, the motion information may include information indicating whether L0 prediction, L1 prediction, or bi-prediction is applied. The residual information is information on the residual samples and may include information on quantized transform coefficients for the residual samples.

The output bitstream may be stored in a (digital) storage medium and transmitted to the decoding apparatus 300 or may be transmitted to the decoding apparatus 300 via a network.

Meanwhile, as described above, the encoding apparatus 200 may generate a reconstructed picture (including reconstructed samples and a reconstructed block) on the basis of reference samples and residual samples. This is intended to derive the same prediction result from the encoding apparatus as that acquired by the decoding apparatus 300, and can improve coding efficiency. Therefore, the encoding apparatus 200 may store the reconstructed picture (or the reconstructed samples or the reconstructed block) in the memory and utilize it as a reference picture for inter prediction. An in-loop filtering procedure and the like may be further applied to the reconstructed picture as described above.

FIG. 6 is a flowchart illustrating an inter-prediction-based video/image decoding method to which an embodiment of the present disclosure is applicable.

Referring to FIG. 6, the decoding apparatus 300 may perform operations that correspond to the operations performed by the encoding apparatus 200. The decoding apparatus 300 may perform prediction on the current block on the basis of the received prediction information and derive prediction samples.

Specifically, the decoding apparatus 300 may determine a prediction mode for the current block on the basis of the received prediction information (S600). The decoding apparatus 300 may determine which inter prediction mode is applied to the current block on the basis of the prediction mode information in the prediction information.

For example, the decoding apparatus 300 may determine whether the merge mode is applied to the current block or whether the (A)MVP mode is applied to the current block on the basis of the merge flag. Alternatively, the decoding apparatus 300 may select one of various inter-prediction mode candidates on the basis of a mode index. The inter-prediction mode candidates may include the skip mode, a merge mode, and/or the (A)MVP mode or may include various inter-prediction modes which will be described below.

The decoding apparatus 300 may derive motion information of the current block on the basis of the determined inter prediction mode (S610). For example, when the skip mode or the merge mode is applied to the current block, the decoding apparatus 300 may generate a merge candidate list which will be described below, and select one of merge candidates included in the merge candidate list. This selection may be performed on the basis of the foregoing selection information (the merge index). The decoding apparatus 300 may derive motion information of the current block using motion information of the selected merge candidate. The motion information of the selected merge candidate may be used as motion information of the current block.

As another example, when the (A)MVP mode is applied to the current block, the decoding apparatus 300 may generate an (A)MVP candidate list which will be described below, and used motion vector of selected one of MVP candidates included in the (A)MVP candidate list as an MVP of the current block. This selection may be performed on the basis of the foregoing selection information (the MVP flag or the MVP index). In this case, the decoding apparatus 300 may derive an MVD of the current block on the basis of the information on the MVD and derive a motion vector of the current block on the basis of the MVP and MVD of the current block. Also, the decoding apparatus 300 may derive a reference picture index of the current block on the basis of the reference picture index information. A picture indicated by the reference picture index within a reference picture list for the current block may be derived as a reference picture which is referred to for inter prediction of the current block.

Meanwhile, as will be described below, motion information of the current block may be derived without generating a candidate list. In this case, motion information of the current block may be derived in accordance with a procedure started in a prediction mode which will be described below. Then, the foregoing candidate list generation may be omitted.

The decoding apparatus 300 may generate prediction samples for the current block on the basis of the motion information of the current block (S620). In this case, the decoding apparatus 300 may derive a reference picture on the basis of the reference picture index of the current block and derive prediction samples for the current block using samples for a reference block indicated by the motion vector of the current block within the reference picture. In this case, a prediction sample filtering procedure for all or some of the prediction samples for the current block may be further performed, which will be described below.

For example, the inter predictor 332 of the decoding apparatus 300 may include a prediction mode determiner, a motion information deriver, and a prediction sample deriver. The prediction mode determiner may determine a prediction mode for the current block on the basis of the received prediction mode information. The motion information deriver may derive the motion information (the motion vector, the reference picture index, and/or the like) of the current block on the basis of the received motion information. The prediction sample deriver may derive the prediction samples of the current block.

The decoding apparatus 300 derives residual samples of the current block on the basis of the received residual information (S630). The decoding apparatus 300 may generate reconstructed samples for the current block on the basis of the prediction samples and the residual samples and generate a reconstructed picture on the basis of the reconstructed samples (S640). Subsequently, an in-loop filtering procedure, etc., may be further applied to the reconstructed picture as described above.

FIG. 7 is a flowchart illustrating an inter-prediction procedure to which an embodiment of the present disclosure is applicable.

Referring to FIG. 7, an inter-prediction procedure may include an operation of determining an inter prediction mode, an operation of deriving motion information in accordance with the determined prediction mode, and an operation of performing prediction (generating prediction samples) on the basis of the derived motion information. The inter-prediction procedure may be performed by the encoding apparatus 200 and the decoding apparatus 300 as described above. In the present document, a coding apparatus may include the encoding apparatus 200 and/or the decoding apparatus 300.

Referring to FIG. 7, the coding apparatus determines an inter prediction mode for a current block (S700). A variety of inter prediction modes may be used to predict a current block within a picture. For example, various modes including a merge mode, the skip mode, the MVP mode, an affine mode, a sub-block merge mode, a merge mode with MVD (MMVD), etc., may be used. A decoder side motion vector refinement (DMVR) mode, an adaptive motion vector resolution (AMVR) mode, bi-prediction with CU-level weight (BCW), bi-directional optical flow (BDOF), etc., may be used as additional modes. In addition, according to an embodiment of the present disclosure, the foregoing inter prediction modes may include a multi-hypothesis prediction (MHP) mode. The MHP mode represents a method of performing prediction by calculating a weighted sum of additional prediction blocks which are generated on the basis of additional motion information with respect to a unidirectional prediction or bidirectional prediction (or pair-prediction) block. This MHP mode will be described in detail below.

In the present disclosure, the affine mode may also be referred to as "affine motion prediction mode. Also, the MVP mode may be referred to as "advanced motion vector prediction (AMVP) mode." In the present disclosure, some modes and/or motion information candidates derived in some modes may be included as one of candidates related to motion information of other modes. For example, a history-based motion vector prediction (HMVP) candidate may be added as a merge candidate for the merge/skip mode or an MVP candidate for the AMVP mode. When the HMVP candidate is used as a motion information candidate for a merge mode or the skip mode, the HMVP candidate may be referred to as "HMVP merge candidate."

When prediction mode information indicating an inter prediction mode of the current block may be signaled from the encoding apparatus 200 to the decoding apparatus 300. The prediction mode information may be included in a bitstream and transmitted to the decoding apparatus 300. The prediction mode information may include index information indicating one of multiple candidate modes. Alternatively, the inter prediction mode may be indicated through hierarchical signaling of flag information.

In this case, the prediction mode information may include one or more flags. For example, the encoding apparatus 200 may signal a skip flag to indicate whether the skip mode is applied, signal a merge flag to indicate whether a merge mode is applied when the skip mode is not applied, and further signal a flag indicating that the MVP mode is applied or a flag for additional mode when no merge mode is applied. The affine mode may be signaled as an independent mode or signaled as a mode dependent on a merge mode, the MVP mode, or the like. For example, the affine mode may include an affine merge mode and an affine MVP mode.

The coding apparatus may derive motion information of the current block (S710). The motion information may be derived on the basis of the inter prediction mode. The coding apparatus may perform inter prediction using the motion information of the current block.

The encoding apparatus 200 may derive optimal motion information of the current block through a motion estimation procedure.

For example, the encoding apparatus 200 may search a determined search range within a reference picture for a similar reference block having high correlation with an original block in an original picture of the current block in fractional pixel units and derive motion information from the reference block. Block similarity may be derived on the basis of differences of phase-based sample values. For example, block similarity may be calculated on the basis of the SAD between the current block (or a template of the current block) and a reference block (or a template of the reference block). In this case, the encoding apparatus 200 may derive motion information on the basis of a reference block with the smallest SAD within a search area. The derived motion information may be signaled to the decoding apparatus 300 on the basis of the inter prediction mode in accordance with various methods.

The coding apparatus may perform inter prediction on the basis the motion information of the current block (S720). The coding apparatus may generate a prediction sample for the current block on the basis of the motion information. The current block including the prediction samples may be referred to as "predicted block."

The MHP will be described in detail below. In the present document, MHP may also be referred to as "multi-reference mode," "multi-reference prediction," "multi-reference prediction mode," "multi-reference block mode," "MHP mode," "multi-hypothesis inter-prediction mode," "inter-inter combination prediction mode," "combined inter prediction mode," "combined prediction mode," "multi-inter-prediction mode," "multi-prediction mode," "additional reference prediction mode," "additional reference mode," "multi-reference block," and the like. Also, the MHP mode may be a mode in which an additional reference block is used (or applied, available, present, or allowed) in addition to a basic reference block.

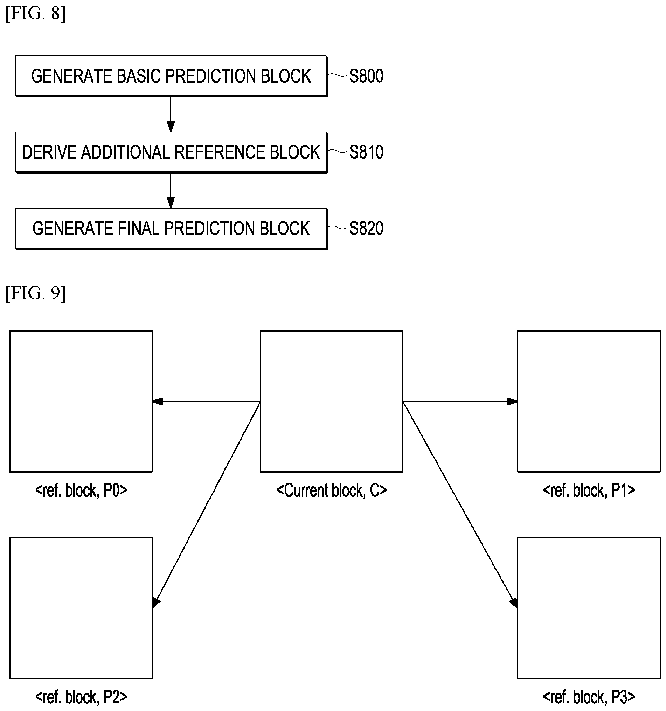

FIG. 8 is a flowchart illustrating an inter prediction method performed by a decoding apparatus according to an embodiment of the present disclosure.

Referring to FIG. 8, the decoding apparatus 300 may generate a basic prediction block of a current block (S800). In other words, the decoding apparatus 300 may generate the basic prediction block by performing unidirectional or bidirectional prediction. When there are multi-reference blocks, the decoding apparatus 300 may derive an additional reference block in addition to a prediction block generated (or derived) through unidirectional or bidirectional prediction and combine the additional reference block with the basic prediction block. As an example, the basic prediction block may be an L0 prediction block or an L1 prediction block or may be a block acquired by calculating a weighted sum of the L0 and L1 prediction blocks. In the present embodiment, a case where the basic prediction block is a block acquired by calculating a weighted sum of the L0 and L1 prediction blocks will be primarily described, but the present disclosure is not limited thereto. The basic prediction block may be a reference block before the weighted sum is calculated. In the present disclosure, the basic prediction block may be referred to as "initial prediction block," "temporary prediction block," "reference prediction block," "regular prediction block," etc., and the basic reference block may be referred to as "initial reference block," "temporary reference block," "regular reference block," or the like.

According to an embodiment, the decoding apparatus 300 may derive a first reference block and a second reference block of the current block by performing bidirectional prediction and generate a basic prediction block by calculating a weighted sum of the first reference block and the second reference block. Alternatively, the decoding apparatus 300 according to the present disclosure may generate a basic prediction block by deriving a third reference block of the current block by performing unidirectional prediction. In other words, a basic prediction block may be derived by calculating a weighted sum of a plurality of reference blocks or derived from a single reference block.

According to an embodiment, weights may be used for a weighted sum of L0 and L1 prediction blocks. The weights are weights used for weighted prediction and may collectively refer to bi-prediction with CU-based weights (BCW) and CU-based weights (CW). The weights may be derived from a weight candidate list. The weight candidate list may include a plurality of weight candidates and may be predefined in the encoding apparatus 200 and the decoding apparatus 300.

The weight candidates may be a weight set (i.e., a first weight and a second weight) indicating weights applied to each of bidirectional prediction blocks or may be a weight applied to a prediction block corresponding to any one of the two directions. When only a weight applied to a prediction block corresponding to any one direction is derived from the weight candidate list, a weight applied to a prediction block corresponding to the other direction may be derived on the basis of the weight derived from the weight candidate list. For example, the weight applied to the prediction corresponding to the other direction may be derived by subtracting the weight derived from the weight candidate list from a predetermined value.

According to an embodiment, a weight index indicating a weight used for weighted prediction of the current block within the weight candidate list may be derived. In the present disclosure, the weight index may be referred to as "bcw_idx" or "bcw index." The weight index may be derived by the decoding apparatus or signaled from the encoding apparatus. When derived by the decoding apparatus, the weight index may be derived as a weight index of a specific merge candidate within a merge candidate list. As an example, the specific merge candidate may be specified within the merge candidate list by a merge index.

The decoding apparatus 300 may derive (or generate) additional reference blocks of the current block (S810). In other words, the decoding apparatus 300 may derive multi-reference blocks of the current block.

The decoding apparatus 300 may derive the additional reference blocks in addition to the basic prediction block and combine (or calculate a weighted sum of) the basic reference block and the derived additional reference blocks.

According to an embodiment, when multi-reference blocks are applied (or allowed or present), the decoding apparatus 300 may derive up to a predefined number of additional reference blocks and combine the additional reference blocks with the basic reference block. In other words, the decoding apparatus 300 may combine (or calculate a weighted sum of) the predefined number of additional reference blocks or less and the basic reference block. As an example, the predefined number may be 2. As another example, the predefined number may be one of 1, 2, 3, and 4. As another example, the predefined number may be referred to as "maximum number of additional reference blocks."

When a plurality of additional reference blocks are combined with the basic reference block, the additional reference blocks may be sequentially added to the basic prediction block using a weighted sum. For example, when up to two additional reference blocks are generated, a prediction block may be generated by calculating a weighted sum of the basic prediction block and a first additional reference block, and a final prediction block may be generated by calculating a weighted sum of the generated prediction block and a second additional reference block. The prediction block generated by calculating the weighted sum of the basic prediction block and the first additional reference block may be referred to as "intermediate prediction block."

When a plurality of additional reference blocks are combined with the basic reference block, the plurality of generated additional reference blocks may be simultaneously added to the basic prediction block using a weighted sum. In other words, after the plurality of additional reference blocks are generated, weights may be applied to each of the plurality of additional reference blocks and the basic prediction block (or the L0 prediction block and the L1 prediction block), and the results may be simultaneously summed.

According to various embodiments, the decoding apparatus 300 may determine whether various reference blocks are applied. In this case, before operation S810, an operation of determining whether multi-reference blocks are applied may be added. Here, whether multi-reference blocks are applied may be explicitly signaled or implicitly derived (or determined) by the decoding apparatus 300.

According to various embodiments, whether multi-reference blocks are applied may be signaled from the encoding apparatus 200 to the decoding apparatus 300. For example, a flag indicating whether multi-reference blocks are applied may be signaled from the encoding apparatus 200 to the decoding apparatus 300. Here, a condition for signaling/parsing the flag may be predefined. The condition for signaling/parsing the flag may be an availability condition for multi-reference blocks. When the signaling/parsing condition is satisfied, the decoding apparatus 300 may parse the flag from the bitstream.

According to various embodiments, whether multi-reference blocks are applied may be derived by the decoding apparatus 300 on the basis of predefined encoding information.

According to various embodiments, the decoding apparatus 300 may acquire multi-reference block information (also referred to as "multi-reference block prediction information") to generate an additional reference block. The multi-reference block information may include weight information and/or prediction information. An additional reference block may be derived on the basis of the prediction information, and the derived additional reference block may be added to the basic prediction block (or intermediate prediction block) on the basis of the weight information using a weighted sum. In addition, the multi-reference block information may further include a flag indicating whether multi-reference blocks are applied.

The prediction information may include prediction mode information used for additional reference block derivation and motion information in accordance with the prediction mode. The prediction mode information may be inter prediction mode information that indicates a merge mode or the AMVP mode. For example, the prediction mode information may further include a merge flag. In other words, a merge mode or the AMVP mode may be used for the derivation of multi-reference blocks, and a flag syntax element for indicating this may be signaled.

A predefined prediction mode from a merge mode and the AMVP mode may be used for the derivation of multi-reference blocks. The predefined prediction mode may be selected from a merge mode and the AMVP mode on the basis of the predefined encoding information.

When a merge mode is used for the derivation of multi-reference blocks, the prediction information may include a merge index. The merge index may specify a merge candidate in the merge candidate list. When the AMVP mode is used for the derivation of multi-reference blocks, the prediction information may include an MVP flag, a reference index, and/or MVD information. The MVP flag may specify a candidate in an MVP candidate list.

The decoding apparatus 300 may generate a final prediction block by calculating a weighted sum of the basic prediction block and the additional reference blocks (S820). As described above, the number of additional reference blocks may be the predefined number or less. For example, when the number of additional reference blocks is 2, the final prediction block may be a block acquired by calculating a weighted sum of the basic prediction block and the two additional reference blocks. According to an embodiment, weight information for the weighted sum may be signaled or derived.

As described above, when a plurality of additional reference blocks are combined with the basic reference block, the additional reference blocks may be added to the basic prediction block sequentially or simultaneously using a weighted sum.

In general, an inter prediction process supports unidirectional prediction or bidirectional prediction. However, when more prediction blocks are included, the blocks may be considered multi-reference blocks. In the present disclosure, a reference block used for unidirectional/bidirectional prediction in video codecs such as high efficiency video coding (HEVC), versatile video coding (VVC), etc., is described as a regular (basic) reference block, and other additional reference blocks are described as additional reference blocks, multi-reference blocks, or the like.

According to an embodiment, information on additional reference blocks may be signaled as a merge index in the same or similar manner as a merge mode. Alternatively, information on additional reference blocks may be signaled in the same or similar manner as the AMVP mode using a reference index, an MVP flag (or index), an MVD, or the like. Alternatively, information on additional reference blocks may be inherited from an already-decoded neighboring block to derive motion information. According to an embodiment, whether information on additional reference blocks is signaled may be determined in accordance with the number of additional reference blocks used. For example, when there is one additional reference block, information on the additional reference block may be signaled, and when there are two additional reference blocks, all or some information on the additional reference blocks may not be signaled but may be derived on the decoder side.

According to an embodiment of the present disclosure, an in-screen prediction block and an IBC prediction block are included as multiple prediction block by signaling/deriving additional motion information and weight information for prediction blocks in addition to direction-specific motion information during an inter prediction process. Accordingly, compression performance can be improved through the generation of various final prediction blocks.

FIG. 9 is a diagram showing examples of reference blocks used in a multi-reference block mode according to an embodiment of the present disclosure.

When there are multi-reference blocks, each reference block may be presented as shown in FIG. 9. In FIG. 9, reference blocks P0 and P1 are regular reference blocks, and reference blocks P2 and P3 are multi-reference blocks (i.e., a plurality of additional reference blocks).

For convenience of description, FIG. 9 shows a case where two reference blocks exist in each prediction direction, but the number of reference blocks is not limited thereto. In other words, the number of reference blocks per each prediction direction may vary, and the motion compensation order may also change. The following description related to multi-reference blocks is based on FIG. 9.

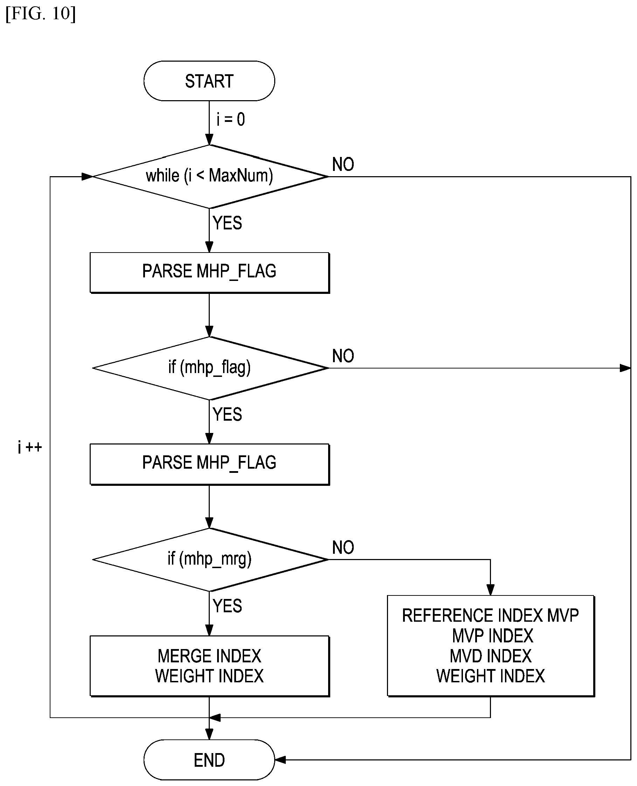

FIG. 10 is a flowchart illustrating a method of signaling/parsing motion information of an added prediction block according to an embodiment of the present disclosure when motion information of multi-reference blocks is signaled/-parsed. Operations described in FIG. 10 may be performed on the encoding apparatus 200 and/or the decoding apparatus 300.

When there are multi-reference blocks and information on the blocks is signaled/parsed, motion information of added prediction blocks may be signaled/parsed in the order shown in FIG. 9. Here, MaxNum may be a maximum number of additional reference blocks.

Referring to FIG. 10, the operations of FIG. 10 may be repeated as a loop until the number of additional reference blocks reaches the maximum number. When the number of additional reference blocks is the maximum number or less, mhp_flag may be parsed. mhp_flag may be a flag for indicating whether multi-reference blocks exist.

When multi-reference blocks exist (i.e., when mhp_flag is "1"), mhp_mrg may be parsed. mhp_mrg may indicate a merge mode for multi-reference blocks (MH-MERGE) or an inter mode for multi-reference blocks (MH-AMVP). mhp_mrg enables determination between a merge mode or the inter (AMVP) mode for multi-reference blocks.

In the case of a merge mode (i.e., when mhp_mrg is "1"), a merge index and a weight index may be signaled. In the case of the inter (AMVP) mode, a reference index, an MVP index, MVP data, and a weight index may be signaled.

As shown in FIG. 10, when the maximum number of generatable additional reference blocks is MaxNum, it may be determined from mhp_flag whether multi-reference blocks exist. For example, when MaxNum is 2, mhp_flag may have a value as shown in Table 5 below. Depending on the value, it may be determined whether a first additional block (i.e., a first additional reference block) and a second additional block (i.e., a second additional reference block) exist.

[Table 5]

| mhp_flag | 1st additional block | 2nd additional block |
|---|---|---|
| "0" | X (absent) | X (absent) |
| "1," "0" | O (present or exists) | X (absent) |
| "1," "1" | O (present or exists) | O (present or exists) |

Referring to Table 5, when mhp_flag is "1," an additional reference block may exist. mhp_mrg enables determination between a merge mode for multi-reference blocks (MH-MERGE) or the inter mode for multi-reference blocks (MH-AMVP). In the case of the MH-MERGE mode, a merge index and a weight index may be signaled. In the case of the MH-AMVP mode, a reference index, an MVP index (or flag), MVD data, and a weight index may be signaled.

Syntax names such as mhp_flag, mhp_mrg, etc., described in the present disclosure are illustrative, and the names may vary. In the present disclosure, prediction modes for a case where multi-reference blocks exist are described as MH-MERGE and MH-AMVP, but these may be distinguished from a merge mode and the inter mode representing motion information of regular reference blocks. In particular, an MVP candidate list for regular reference blocks and an MVP candidate list for additional reference blocks may be separately generated. In addition, the MH-MERGE mode and the MG-AMVP mode for additional reference blocks may include weight index information.

In addition to the foregoing method of applying multi-reference blocks via signaling, derivation may be used for applying multi-reference blocks. In particular, since merge modes employs motion information that is transmitted (inherited) from encoded/decoded adjacent and non-adjacent blocks, the motion information received from the encoded/decoded adjacent and non-adjacent blocks may also be used as information for multi-reference blocks. For example, when the current block is a merge mode and adjacent and non-adjacent blocks for acquiring motion information include MHP information, the corresponding information may be received and used for generating an additional reference block of the current block.

As described above, multi-reference block information may be acquired through a signaling or derivation process, and both methods may be applied. In particular when the number of multi-reference blocks acquired through the derivation process is smaller than MaxNum, the multi-reference blocks may be added through signaling. For example, when N multi-reference blocks are generated and M blocks are acquired through a derivation process (M ≤ N), up to N-M multi-reference blocks may be acquired through signaling.

The additional reference blocks acquired through signaling or derivation may be added to the basic reference block using a weighted sum, enabling the generation of a final prediction block. As an example, when the two additional reference blocks P2 and P3 exist and weights acquired through signaling or derivation per additional reference block are assumed to be w0 and w1, a process of generating a final prediction block using the weights may be represented as shown in Equation 2 below.

[Equation 2]

$$\text{Step 1: } P' = (P0 + P1) / 2$$

$$\text{Step 2: } P'' = w0 * P2 + (1\text{-}w0) * P'$$

$$\text{Step 3: } P = w1 * P3 + (1\text{-}w1) * P''$$

In Equation 2, w0 and w1 are weights applied to the additional reference blocks P2 and P3, respectively. In the first step Step 1 of Equation 2, a basic prediction block P' may be generated using the basic reference blocks P0 and P1. In the second step Step 2 of Equation 2, a weighted sum of the basic prediction block P' and the additional reference block P2 may be calculated. In the third step Step 3 of Equation 2, a weighted sum of a prediction block (intermediate prediction block) P'' acquired via weighted summation and the additional reference block P3 may be calculated, generating a final prediction block P.

It is described that multi-reference blocks are added during an inter prediction process, but the addition of multi-reference blocks is not limited to the process and may be included in an intra prediction and IBC process. In various prediction modes, when multi-reference blocks are included, regular blocks (i.e., a regular reference block) may collectively refer to inter blocks, intra blocks, IBC blocks other than multi-reference blocks, and the multi-reference blocks also include not only inter modes or merge modes but also intra modes and IBC modes. To determine modes of multi-reference blocks, flags indicating each of the modes may be included, and these flags may be acquired via transmission (or inheritance) other than signaling. Alternatively, multi-reference blocks may be derived and generated on the decoder side when a specific condition other than signaling or a transmission method is satisfied.

However, when multi-reference blocks exist or an intra mode exists in multi-reference blocks, a signaling process and a decoding process for transform, filtering, related syntax and/or the like may be performed under various conditions.

Therefore, in the embodiment of the present disclosure, a signaling and decoding process performed in accordance with whether multi-reference blocks exist or whether an intra mode exists in multi-reference blocks will be described.

Prior to the description, various tools related to the signaling and decoding process for a case where an intra mode exists in multi-reference blocks or multi-reference blocks exist will be described below.

## IBC

IBC is a tool adopted for HEVC extension of screen content coding (SCC). This is well known for significantly improving coding efficiency of screen content materials. Since an IBC mode is implemented as a block-level coding mode, block matching (BM) may be performed on an encoder to find an optimal block vector (BV) (or motion vector) for each CU. Here, the BV may be used for representing a displacement from a current block to an already-reconstructed reference block in the current block. A luma BV of an IBD-coded CU may have an integer resolution (or precision). A chroma BV may be rounded to integer resolution. When combined with AMVR, an IBC mode may switch between 1-pel (pixel) motion vector resolution and 4-pel (pixel) motion vector resolution. An IBD-coded CU may may be handled as a third prediction mode other than intra or inter prediction modes. An IBC mode may be applied to CUs whose width and height both are 64 luma sample or less.

On the encoder side, hash-based motion estimation may be performed for IBC. The encoder may perform a BD check on blocks whose width and height are not larger than 16 luma sample. In a non-merge mode, a BV search may be performed first using a hash-based search. When the hash search does not return a valid candidate, a BM-based local search may be performed.

In the hash-based search, hash key matching (32-bit cyclic redundancy check (CRC)) between the current block and a reference block may be extended to all allowed block sizes. The hash key calculation for every position in the current picture may be based on $4 \times 4$ sub-blocks. For the current block having a larger size, a hash key may be determined to match that of the reference block when all the hash keys of all $4 \times 4$ sub-blocks match the hash keys in the corresponding reference positions.

When hash keys of multi-reference blocks are found to match that of the current block, BV costs of matched reference blocks may be calculated, and the lowest cost may be selected.

In a block matching search, a search range may be set to cover both previous and current CTUs. At a CU level, an IBC mode may be signaled with a flag and may be signaled as an IBV AMVP mode or IBC skip/merge mode as follows.

IBC skip/merge mode: a merge candidate index may be used to indicate which BVs in a list from neighboring candidate IBC coded blocks are used to predict the current block. The merge list may include spatial, HMVP, and pairwise candidates.

IBC AMVP mode: a BV difference may be coded in the same way as an MVD. A BV prediction method may employ two candidates as predictors (when IBC coded), one from a left neighbor and one from a top neighbor. When either neighbor is not available, a default block may be used as a predictor. A flag may be signaled to indicate a BV predictor index.

## Geometric partitioning mode (GPM)

In VVC, the GPM may be supported for inter prediction. The GPM is a type of merge mode may may be signaled with a CU-level flag. Other merge modes may include a regular merge mode, an MMVD mode, a CIIP mode, and a sub-block merge mode. For each possible CU size $w \times h = 2^m \times 2^n$, a total of 64 partitions may be supported. Here, m, n $\in \{3, ..., 6\}$, and $8 \times 64$ and $64 \times 8$ are excluded.

When this mode is used, a CU may be divided into two partitions by a geometrically positioned straight line. The position of the partition line may be mathematically derived from an angle of a specific partition and offset parameters. Each part of the geometric partitions of the CU may be inter-predicted using its own motion. Only single prediction is allowed for each partition, that is, each part has one motion vector and one reference index. The single prediction motion constraint is applied to ensure that, similar to conventional bi-prediction, only two motion-compensated predictions are necessary for each CU.

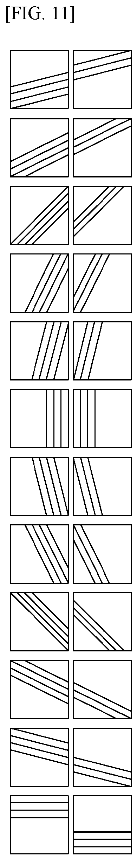

FIG. 11 shows examples of GPM partitions grouped at the same angle.

Unidirectional prediction motion of each partition may be derived using a process illustrated in FIG. 11.

When the GPM is used for a current CU, a geometric partition index indicating a partition mode of geometric partitioning (angle and offset) and two merge indices (one for each partition) may be additionally signaled. The maximum number of GPM candidates may be explicitly signaled in an SPS to specify syntax binarization for GPM merge indices. After predicting each part of the geometric partitions, samples values may be adjusted in accordance with a geometric partitioning edge using blending processing with adaptive weights like blending along the geometric partitioning edge which will be described below. This is a prediction signal for the whole CU, and a transform and quantization process may be applied to the whole CU as in other prediction modes. Finally, a motion field of the CU predicted using the GPM may be stored as in a motion field storage for geometric partitioning mode which will be described below.

**Blending along geometric partitioning edge**

After each part of the geometric partitions is predicted using its own motion, blending may be applied to two prediction signals to derive samples around the geometric partitioning edge. A blending weight for the position of each of CUs may be derived on the basis of a distance between the individual position and the partitioning edge.

A distance from a position (x, y) to the partitioning edge may be derived as shown in Equation 3 below.

[Equation 3]

$$d(x,y) = (2x+1-w)\ \cos(\varphi_i) + (2y+1-h)\ \sin(\varphi_i) - \rho_j$$

$$\rho_j = \rho_{x,j}\cos(\varphi_i) + \rho_{y,j}\sin(\varphi_i)$$

$$\rho_{x,j} = \begin{cases} 0 & i\,\%\,16 = 8 \text{ or } (i\,\%\,16 \neq 0 \text{ and } h \geq w) \\ \pm(j \times w) \gg 2 & otherwise \end{cases}$$

$$\rho_{y,j} = \begin{cases} \pm(j \times h) \gg 2 & i\,\%\,16 = 8 \text{ or } (i\,\%\,16 \neq 0 \text{ and } h \geq w) \\ 0 & otherwise \end{cases}$$

Here, i and j are indices for angle and offset of a geometric partition, which depend on the signaled geometric partition index. Signs of $\rho_{x,j}$ and $\rho_{y,j}$ depend on an angle index i.

A weight for each part of a geometric partition may be derived as shown in Equation 4 below.

[Equation 4]

$$wIdxL(x,y) = partIdx\ ?\ 32+d(x,y):32 - d(x,y)$$

$$w_0(x,y) = \frac{Clip3(0,8,(wIdxL(x,y)+4) \gg 3)}{8}$$

$$w_1(x,y) = 1 - w_0(x,y)$$

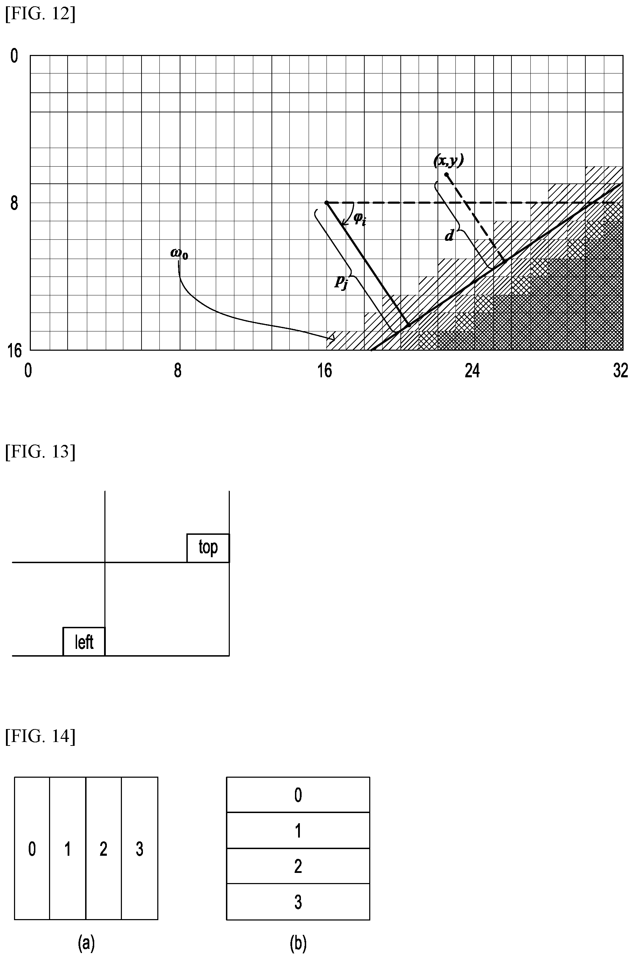

partIdx is based on the angle index. FIG. 12 shows an example of generating a blended weight $w_0$ using the GPM. An example of the weight $w_0$ may be illustrated as shown in FIG. 12.

**Motion field storage for GPM**

Mv1 from a first part of a geometric partition, Mv2 from a second part of the geometric partition, and a combined Mv of Mv1 and Mv2 may be stored in a motion field of a GPM-coded CU.

A stored motion vector type for each individual position in the motion field is determined as shown in Equation 5 below.

[Equation 5]

$$\text{sType} = \text{abs(motionIdx)} < 32 \ ? \ 2 : (\ \text{motionIdx} \leq 0 \ ?(\ 1 - \text{partIdx}\ ) : \text{partIdx}\ )$$

Here, motionIdx is equal to d(4x+2, 4y+2), and partIdx is based on the angle index i.

When sType is equal to 0 or 1, Mv0 or Mv1 may be stored in a corresponding motion field. Otherwise, when sType is equal to 2, the combined Mv of Mv1 and Mv2 may be stored. The combined Mv may be generated through the following process.

When Mv1 and Mv2 are from different reference picture lists (one from L0 and the other from L1), Mv1 and Mv2 may be simply combined to generate bidirectionally predicted motion vectors.

Otherwise, when Mv1 and Mv2 are in the same list, only the unidirectionally predicted motion Mv2 may be stored.

### CIIP

CIIP may be applied to the current block. An additional flag (e.g., ciip_flag) may be signaled to indicate whether the CIIP mode is applied to the current CU. For example, when a CU is coded in a merge mode, if the CU includes 64 luma samples (i.e., if the product of a CU width and a CU height is 64 or more) and both the CU width and the CU height are less than 128 luma samples, an additional flag may be signaled to indicate whether the CIIP mode is applied to the current CU. As its name indicates, CIIP prediction involves combining an inter prediction signal and an intra prediction signal. An inter prediction signal P_inter of the CIIP mode may be derived through an inter prediction process applied to the regular merge mode, and an intra prediction signal P_intra may be derived in accordance with a regular intra prediction process with the planar mode. Then, the intra and inter prediction signals may be combined using a weighted average. FIG. 13 is a diagram illustrating top and left neighboring blocks used in CIIP weight derivation. Here, weights may be calculated as follows in accordance with coding modes of the top and left neighboring blocks shown in FIG. 13.

When the top neighbor is available and intra coded, isIntraTop is set to 1, or otherwise, isIntraTop is set to 0;
When the left neighbor is available and intra coded, isIntraLeft is set to 1, or otherwise, isIntraLeft is set to 0;
When (isIntraTop+isIntraLeft) is equal to 2, wt is set to 3;
Otherwise, when (isIntraTop+isIntraLeft) is equal to 1, wt is set to 2;
Otherwise, wt is set to 1.

CIIP prediction may be configured as shown in Equation 6 below.

[Equation 6]

$$P_{\text{CIIP}} = \big((4 - \text{wt}) * P_{inter} + \text{wt} * P_{intra} + 2\big) \gg 2$$

### Combining CIIP including template-based intra mode derivation (TIMD) and template matching (TM) merge

In the CIIP mode, prediction samples may be generated by assigning weights to an inter prediction signal predicted using a CIIP-TM merge candidate and an intra prediction signal predicted using TIMD derived in an intra prediction mode. This approach may be applied to only CBs including areas of 1024 pixels or less.

TIMD may be used for deriving an IPM in CIIP. Specifically, an IPM with lowest SATD values in a TIMD mode list may be selected and mapped to one of 67 regular IPMs.

In addition, when a derived IPM is an angular mode, modification of weights (wIntra, wInter) for two tests may be proposed.

FIG. 14 is a set of diagrams illustrating a partitioning method for angular modes.

In near-horizontal modes ($2 \leq$ angular mode index < 34), the current block is vertically partitioned as shown in FIG. 14A. In near-vertical modes ($34 \leq$ angular mode index < 66), the current block is horizontally partitioned as shown in FIG. 14B.

(wIntra, wInter) for different sub-blocks may be presented as shown in Table 6 below.

[Table 6]

| The sub-block index | (wIntra, wInter) |
|:---:|:---:|
| 0 | (6, 2) |
| 1 | (5, 3) |

(continued)

| The sub-block index | (wIntra, wInter) |
|---|---|
| 2 | (3, 5) |
| 3 | (2, 6) |

Using CIIP-TM, a CIIP-TM merge candidate list may be generated for a CIIP-TM mode. Merge candidates may be improved through TM. Like regular merge candidates, CIIP-TM merge candidates may also be rearranged through adaptive reordering of merge candidates (ARMC). The maximum number of CIIP-TM merge candidates may be 2.

**GPM including inter and intra prediction**

In the GPM with inter and intra prediction, final prediction samples may be generated by assigning weights to inter-predicted samples and intra-predicted samples for each GPM-separated region. Inter-predicted samples are derived using an inter GPM, whereas intra-predicted samples may be derived from an IPM candidate list and an index signaled from an encoder. An IPM candidate list size may be predefined as 3.

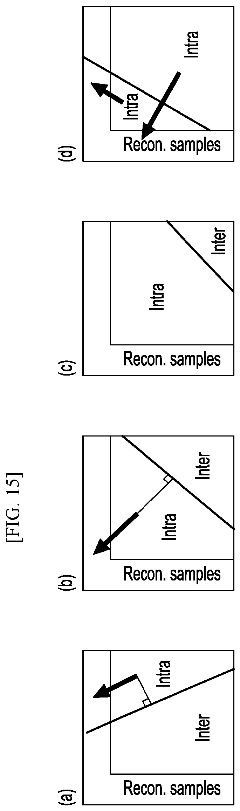

FIG. 15 is a set of diagrams illustrating available IPM candidates in the GPM with inter and intra prediction.

As shown in FIGS. 15A to 15D, available IPM candidates may be a parallel angle mode (parallel mode), a perpendicular angle mode (perpendicular mode), and the planar mode with respect to a GPM block boundary. Further, as shown in FIG. 15, GPM with inter and intra prediction may be limited to reduce signaling overhead for IPMs and prevent an increase in the intra prediction circuit size of a hardware decoder. Also, to additionally improve coding performance, a direct motion vector of a GPM-blending area and an IPM storage may be introduced.

In decoder-side intra mode derivation (DIMD) and neighboring mode-based IMP derivation, the parallel mode may be registered first. Therefore, when there is not the same IPM candidate in the list, up to two IPM candidates derived through DIMD and/or from neighboring blocks may be registered.

In neighboring mode derivation, there are up to five positions for available neighboring blocks, but as shown in Table 7, these may be constrained by GPM block boundary angles that are already used in GPM with TM (GPM-TM).

Table 7 shows positions of available neighboring blocks for IPM candidate derivation in accordance with GPM block boundary angle. A and L may represent the above side and the left side of a prediction block.

[Table 7]

| Angle of GPM | 0 | 2 | 3 | 4 | 5 | 8 | 11 | 12 | 13 | 14 |
|---|---|---|---|---|---|---|---|---|---|---|
| 1st partition | A | A | A | A | L+A | L+A | L+A | L+A | A | A |
| 2nd partition | L-A | L+A | L+A | L | L | L | L | L+A | L+A | L+A |
| Partition angle | 16 | 18 | 19 | 20 | 21 | 24 | 27 | 28 | 29 | 30 |
| 1st partition | A | A | A | A | L+A | L+A | L+A | L+A | A | A |
| 2nd partition | L-A | L+A | L+A | L | L | L | L | L+A | L+A | L+A |

GPM-intra may be combined with GPM-MMVD. To additionally improve coding performance, TIMD may be used for IPM candidates of GPM-intra. The parallel mode may be registered first, and then TIMD, DIMD, and IPM candidates of neighboring blocks may be registered.

**MHP**

In a multi-hypothesis inter-prediction mode, one or more additional motion-compensated prediction signals other than an existing bidirectional prediction signal may be signaled, and a resulting overall prediction signal may be acquired through sample-wise weighted superposition. A bidirectional prediction signal $p_{bi}$ and a first additional prediction signal/hypothesis $h_3$ may be used to acquire a result prediction signal $p_3$ as shown in Equation 7 below.

[Equation 7]

$$p_3 = (1 - \alpha)p_{bi} + \alpha h_3$$

A weight factor $\alpha$ may be specified by add_hyp_weight_idx which is a new syntax element in accordance with Table 8 below.

[Table 8]

| add_hyp_weight_idx | $\alpha$ |
|---|---|
| 0 | 1/4 |
| 1 | -1/8 |

Similarly, one or more additional prediction signals may be used. A resulting overall prediction signal may be repeatedly accumulated with each additional signal as shown in Equation 8 below.

[Equation 8]

$$p_{n+1} = (1 - \alpha_{n+1})p_n + \alpha_{n+1}h_{n+1}$$

The resulting overall prediction signal may be acquired as a final $p_n$ (i.e., $p_n$ having the largest index n). In this exploration experiment (EE), up to two additional prediction signals may be used (i.e., n is limited to 2).

A motion parameter of each additional prediction hypothesis may be explicitly signaled by specifying a reference index, a motion vector predictor, and an MVD or implicitly signaled by specifying a merge index. A multi-hypothesis merge flag may distinguish between these two signaling modes.

MHP may be applied to an inter-AMVP mode only when non-identical weights for BCW are selected in a bidirectional prediction mode.

MHP and BDOF may be combined, but BDOF may only be applied to bidirectional signal parts of prediction signals (i.e., first general hypotheses).

### Overlapped block motion compensation (OBMC)

OBMC may be performed for all motion-compensated block boundaries among right and bottom boundaries of a CU. Therefore, this may be applied to both luma and chroma components. To process CU/sub-block boundaries in a uniform manner, OBMC may be performed on all MC block boundaries at a sub-block level.

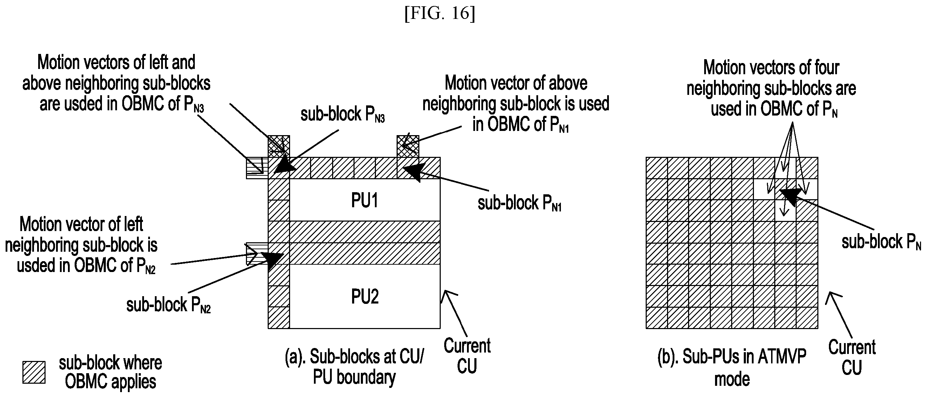

FIG. 16 is a diagram illustrating sub-blocks at a CU/PU boundary and sub-PUs of an advanced temporal motion vector prediction (ATMVP) mode. Here, a size of sub-blocks may be set to 4×4 as described in FIG. 16.

When OBMC is applied to a current sub-block, motion vectors of four connected neighboring sub-blocks that are available and are not identical to current motion vectors may also be used other than the current motion vectors to derive a prediction block for the current sub-block. These multiple prediction blocks based on multiple motion vectors may be assigned weights to generate a final prediction signal.

As shown in FIGS. 16A and 16B, a prediction block based on motion vectors of neighboring sub-blocks is $P_N$ (here, N is indices of above, bottom, left, and right neighboring sub-blocks), and a prediction block based on motion vectors of the current block is Pc. When $P_N$ and Pc belong to the same PU (because they include the same motion information), OBMC may not be performed from $P_N$. Otherwise, all pixels of $P_N$ may be added to the same pixels of Pc. In other words, four rows/columns of $P_N$ may be added to Pc. Weight factors {1/4, 1/8, 1/16, 1/32} are used for $P_N$, and weight factors {3/4, 7/8} may be used for Pc. For $P_N$ generated on the basis of motion vectors of vertically (horizontally) neighboring sub-blocks, pixels present in the same row (column) as $P_N$ may be added to Pc as equal-weight factors.

### Local illumination compensation (LIC)

LIC is an inter prediction technique for modeling local illumination changes between a current block and prediction blocks as a variation function between a current block template and a reference block template. Parameters of this function may be a scaling factor $\alpha$ and an offset $\beta$, which constitute a linear equation, that is, $\alpha*p[x]+\beta$ to compensate illumination changes, where p[x] is a reference sample indicated by a motion vector at a position x on a reference picture. When wrap around motion compensation is enabled, the motion vector may be clipped with a wrap-around offset taken into consideration. Since $\alpha$ and $\beta$ may be derived on the basis of the current block template and the reference block template, no signaling overhead is required for them, except that an LIC flag is signaled for an AMVP mode to indicate the use of LIC.

LIC may be used for inter CUs with the following aspects.

Intra neighbor samples may be used in LIC parameter derivation.

LIC may be disabled for blocks with less than 32 luma samples.

For both non-sub-block and affine modes, LIC parameter derivation may be performed on the basis of template samples corresponding to a current CU instead of partial template block samples corresponding to a first top-left $16 \times 16$ unit.

Samples of the reference block template may be generated using a block motion vector and motion compensation without rounding it to integer-pel resolution (or precision).

For bidirectional-prediction inter CUs, two sets of LIC parameters may be separately derived for L0 and L1 prediction samples. An iterative method may be applied to derive the L0 and L1 parameters. Specifically, the L0 LIC parameter may be first derived by minimizing a difference between an L0 template prediction T0 and a template T, and samples in T may be updated by subtracting the corresponding samples in T0. Subsequently, the L1 parameters may be calculated to minimize a difference between an L1 template prediction T1 and the updated template. Finally, the L0 parameter may be adjusted again in the same manner.

The following describes a signaling and decoding process for each tool when intra modes exist as multi-reference blocks. In the present disclosure, a case where multi-reference blocks exist is described as a case where at least one additional reference block other than a regular reference block (or regular prediction block) exists, and multi-reference blocks are described as a plurality of additional reference blocks.

According to an embodiment, when intra modes exist as multi-reference blocks, a signaling condition of a transform-related flag (i.e., cu_coded_flag) for determining whether a transform and residual signal is included may be changed. When a specific condition is satisfied, cu coded_flag may be signaled, and when the specific condition is not satisfied, a cu coded_flag value may be inferred as "1" or "0." In the present document, it has been described that cu coded_flag may be signaled, but the expression is not limited thereto and may be "parsed," "derived," and the like. For example, the expression may be "signaled," etc., on the encoding side, whereas the expression may be "parsed," "derived," etc., on the decoding side. In the present disclosure, "parsing" may be expressed as "deriving," "obtaining," and the like.

When the current block is an inter mode or an IBC mode and multi-reference blocks exist, the signaling condition of cu_coded_flag may be the number of MH-intra prediction modes. Here, the number of MH-intra prediction modes may be the number of intra prediction modes existing in the multi-reference blocks. When the number of MH-intra prediction modes is 0, cu_coded_flag may be signaled, and when the number of MH-intra prediction modes is 1 or more, cu_coded_flag may be inferred to as a value of 1.

When the current block is an inter mode or an IBC mode and multi-reference blocks exist, the signaling condition of cu_coded_flag may be a block size. When the block size satisfies a specific condition, cu_coded_flag may be signals, or otherwise, cu_coded_flag may be inferred as "1."

Where the current block is an intra mode and multi-reference blocks exist, if a specific condition is satisfied, a cu_coded_flag value may not be inferred as "1," and cu_coded_flag may be signaled. Here, the specific condition may be the number of MH-iner or MH-IBC blocks. When the number of MH-iner or MH-IBC blocks is larger than 0, cu_coded_flag may be signaled.

When the current block is an intra mode and multi-reference blocks exist, the signaling condition of cu_coded_flag may be a block size.

According to an embodiment, when intra modes exist as multi-reference blocks, a boundary strength (BS) determination method in a deblocking filter process may be changed and applied. When each of the current block or adjacent blocks includes one or more MH-intra blocks, BS may be assigned a value of 2. According to the present embodiment, BS may be assigned a value of 0 to 2. According to various embodiments, in an intra mode or the CIIP mode, BS may have a value of 2 or may be extended to a range from 0 to 3. For example, BS may be assigned a value of 3 in an intra mode and assigned a value of 2 in a combined mode. Here, the combined mode may be the CIIP mode. According to various embodiments, a combined mode may represent a mode in which a regular block is an inter or IBC mode and MH-intra is included as multi-reference blocks. According to various embodiments, a combined mode may represent a mode in which a regular block is an intra mode and MH-inter or MH-IBC is included as multi-reference blocks.

According to an embodiment, when an intra mode exists as multi-reference blocks, a sub-block transform (SBT) signaling condition may be changed and applied. For example, when an MH-intra prediction block exists, SBT information may not be signaled. Here, the number of MH-intra blocks may only include signaled MH-intra.

According to an embodiment, when LIC is applied to the current block and multi-reference blocks exist, multi-reference blocks signaled may not be allowed. In particular, intra blocks may not be allowed as multi-reference blocks.

When LIC is applied to the current block, LIC parameters may be derived from the multi-reference blocks and applied. Here, additional LIC flag signaling may not be required, and weight information of the multi-reference blocks may not be included. When the weight information is not included, default weight values may be used for a weighted sum of the multi-reference blocks and a regular block. Here, the default weights may have varying values depending on modes of the multi-reference blocks.

When LIC is applied to the current block, whether LIC is applied for the multi-reference blocks may be determined on the basis of difference values between an LIC parameter of the current block and LIC parameters of the multi-reference blocks. During a process of deriving an LIC parameter, a template area for calculating an LIC parameter of the regular block may vary from template areas for calculating the LIC parameters of the multi-reference blocks. Where multi-reference blocks exist, if signaling information of the multi-reference blocks precedes LIC, LIC for the current block may be limited. Whether LIC is applied may only be applied to MH-intra.

According to an embodiment, when OBMC is applied to the current block and multi-reference blocks exist, multi-reference blocks signaled may not be allowed. In particular, intra blocks may not be allowed as multi-reference blocks.

When OBMC is applied to the current block, weight information of the multi-reference blocks may not be included. When the weight information is not included, default weight values may be used for a weighted sum of the multi-reference blocks and a regular block. Here, the default weights may have varying values depending on modes of the multi-reference blocks.

Where multi-reference blocks exist, if signaling information of the multi-reference blocks precedes OBMC, OBMC for the current block may be limited. Whether OBMC is applied may only be applied to MH-intra.

Where multi-reference blocks exist, OBMC at CU boundaries may be limited, and OBMC performed in sub-block units may be maintained.

According to an embodiment, when intra modes exist as multi-reference blocks, LFNST may be taken into consideration as follows. When a regular block is an inter or IBC mode and multi-reference blocks exist, whether an LFNST kernel is selected (or applied) may be applied as follows to efficiently consider characteristics of a residual signal.

Specifically, when all the multi-reference blocks are intra modes or the multi-reference blocks include one or more intra modes, a representative mode may be determined in accordance with the directionality of each intra mode, and an LFNST kernel based on the mode may be used. When the directionality of each intra mode is inconsistent, an LFNST kernel corresponding to an intra mode of a first multi-reference block may be used. Alternatively, when the directionality of a mode is inconsistent, LFNST may not be applied, or a kernel of the planar mode may be used.

Also, when multi-reference blocks are inter modes or IBC modes, LFNST may not be applied, or a kernel of the planar mode may be used.

In addition, when multi-reference blocks include one intra mode and inter/IBC modes, an LFNST kernel may be selected on the basis of the given intra mode.

The foregoing method may be applied similarly even when a regular block is an intra mode and multi-reference blocks exist. When all the multi-reference blocks are intra modes or the multi-reference blocks include one or more intra modes, an LFNST kernel in accordance with an intra mode of the regular block may be used.

When the intra mode of the regular block is similar to a direction (horizontal, vertical, or no-angular direction) of each intra mode, an intra mode representing the direction may be determined, and an LFNST kernel may be used on the basis of the mode. When the directionality of each intra mode is inconsistent, the LFNST kernel in accordance with the intra mode of the regular block may be used, LFNST may not be applied, or a kernel of the planar mode may be used.

When all the multi-reference blocks are intra or IBC modes, an LFNST kernel in accordance with the intra mode of the regular block may be used, LFNST may not be applied, or a kernel of the planar mode may be used.

When the multi-reference blocks include one intra mode and an inter/ICB mode, an LFNST kernel in accordance with the intra mode of the regular block may be used. Alternatively, when the intra mode of the regular block and intra modes of the multi-reference blocks have similar directions, an intra mode representing the direction may be determined, and an LFNST kernel may be used on the basis of the mode. Otherwise, LFNST may not be applied, or a kernel of the planar mode may be used.

Alternatively, when the intra mode of the regular block and the intra modes of the multi-reference blocks have similar directions, a kernel in accordance with the intra mode of the regular block may be used, or otherwise, a kernel of the planar mode may be used.

The following describes interaction with other tools when intra (MH-intra) modes exist as multi-reference blocks. In particular, the presence of MH-intra modes may represent a relatively large number of residual signals, and thus whether intra modes exist may be taken into consideration for interaction.

In the skip mode, the motion information signaling and derivation method for the merge mode is employed, but no residual signal is signaled. As described above, unlike inter modes, many residual signals are included in intra modes. Accordingly, intra modes as multi-reference blocks may also be applied to a block with a relatively large residual signal.

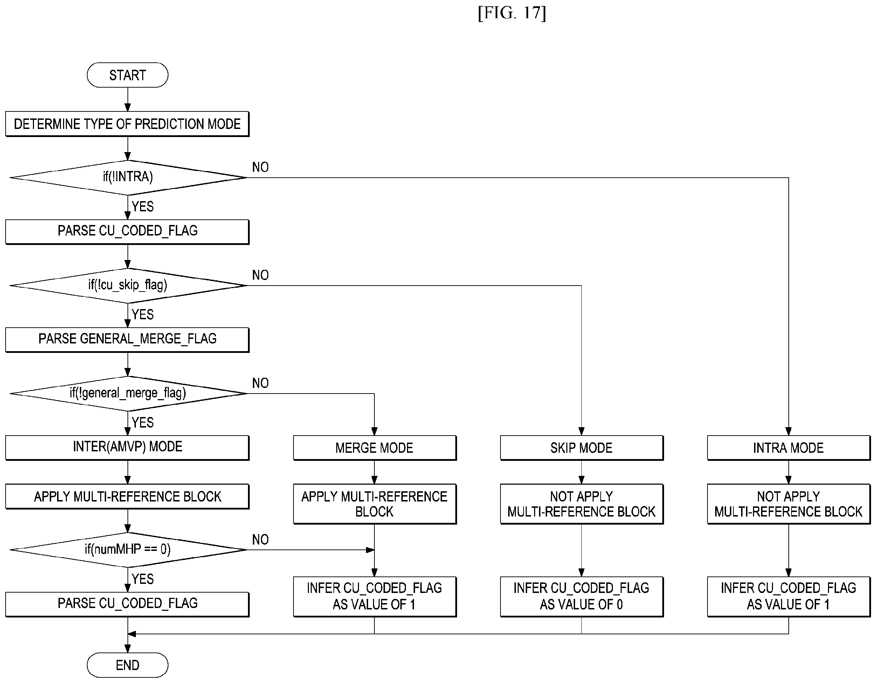

FIG. 17 is a flowchart illustrating a method of parsing a CU depending on whether multi-reference blocks are applied, and whether transform and residual signal information is transmitted based thereon according to an embodiment.

FIG. 17 may show correlation between whether multi-reference blocks are applied and whether transform and residual signal information is transmitted based thereon during a process of parsing a CU (coding _unit()).

Referring to FIG. 17, a process of parsing a CU may begin with a process of parsing a prediction mode. In other words, a type of prediction mode may be determined. In this case, it may be determined (or decided) whether the prediction mode is an intra mode or an inter mode.

In the case of an intra mode, multi-reference blocks may not be applied (allowed) to a corresponding block. In other words, multi-reference blocks may not exist for the corresponding block. Due to a characteristic of intra modes having many residual signals, a transform-related flag, that is, cu_coded _flag information, is not signaled but may always be inferred as a value of 1. Here, cu_coded_flag having a value of 1 may represent that transform information and residual signal information exist.

Otherwise, when the corresponding block is not an intra mode but is the skip mode, multi-reference blocks are not applied. Due to a characteristic of the skip mode not signaling any residual signal, cu_coded_flag information is not signaled but may always be inferred as a value of 0.

Otherwise, when the corresponding block is neither an intra mode nor the skip mode, whether the corresponding block is the inter (AMVP) mode or the merge mode may be determined via general_merge_flag. In the case of the merge mode, multi-reference blocks may be applied, and the multi-reference blocks may include intra modes and the inter (AMVP and merge) modes. Since whether the corresponding block is the skip mode or the merge mode is determined depending on the presence of a residual signal, the merge mode represents that a residual signal exists. Accordingly, cu_coded_flag is not signaled but may be inferred as a value of 1.

Finally, when the corresponding block is determined as the inter (AMVP) mode via general_merge_flag, multi-reference blocks may exist, and the multi-reference blocks may include intra modes and the inter (AMVP and merge) modes. Also, the multi-reference blocks may have signaled modes and inherited modes, but the types and number of inherited modes are unknown during a syntax parsing process. Therefore, where the number of multiple reference signals signaled is numMHP, if numMHP is larger than 0, the corresponding block is determined to have a large amount of information to be signaled due to many residual signals, and cu_coded_flag is not signaled but may be inferred as a value of 1. When numMHP is 0, cu_coded_flag may be signaled with a value of 0 or 1.

More specifically, referring to FIG. 17, a type of prediction mode for the current block may be determined, and when the prediction mode is an intra mode, multi-reference blocks may not be applied (non-application of multi-reference blocks). Here, cu_coded_flag may be inferred as a value of 1.

When the prediction mode is not an intra mode, a flag indicating whether the prediction mode is the skip mode may be parsed to determine whether the prediction mode is the skip mode.

When the prediction mode is not the skip mode, a flag indicating whether the prediction mode is an inter mode or the merge mode may be parsed to determine whether the prediction mode is an inter mode or the merge mode.

When the prediction mode is the merge mode, multi-reference blocks may be applied to the corresponding block (application of multi-reference blocks). Here, the multi-reference blocks may include intra modes and inter modes (AMVP and merge). Since the skip mode and the merge mode are distinguished by the presence or absence of a residual signal, in the case of the merge mode, cu_coded_flag is not signaled but may be inferred as a value of 1 due to the presence of a residual signal.

When the prediction mode is the inter (AMVP) mode, multi-reference blocks may exist for the corresponding block. Here, the multi-reference blocks may include intra modes and the inter (AMVP and merge) modes. Also, the multi-reference blocks may have signaled modes and inherited modes. However, since the number of types of inherited modes is unknown during a syntax parsing process, when the number numMHP of multi-reference blocks signaled is larger than 0, the corresponding block may be determined as a block with a large amount of information to be signaled due to many residual signals. In this case, cu_coded_flag is not signaled but may be inferred as a value of 1. When numMHP is 0, cu_coded_flag may be signaled as a value of 0 or 1.

The following describes a method of parsing cu_coded_flag under a specific parsing condition when multi-reference blocks are applied.

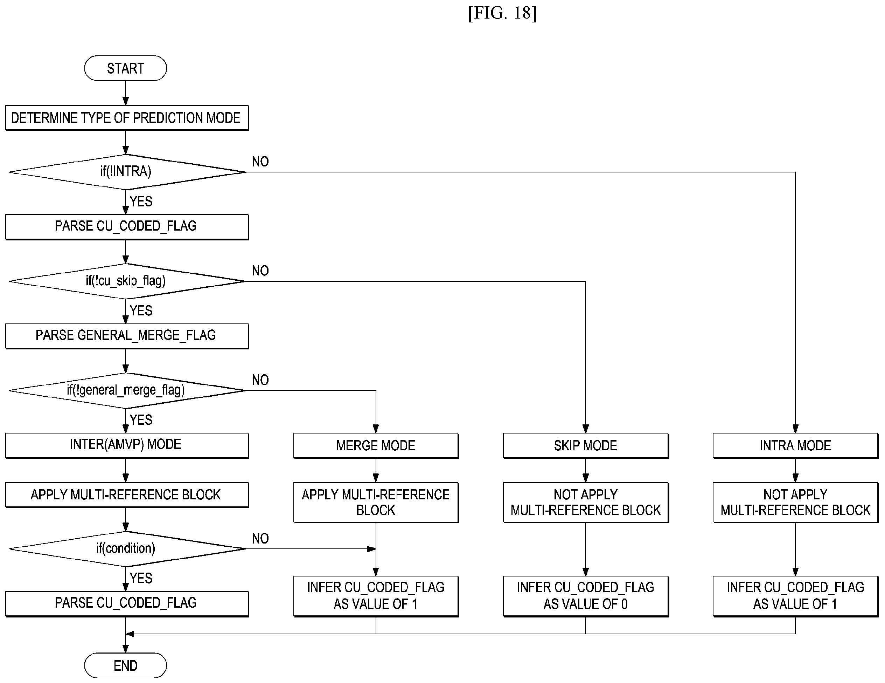

FIG. 18 is a flowchart illustrating a method of parsing a CU depending on whether multi-reference blocks are applied and whether a specific condition is satisfied based thereon according to an embodiment.

As described above, prediction modes may be classified as intra, skip, merge, and inter (AMVP) modes, and it may be determined whether multi-reference blocks are supported (or applied) in accordance with each mode. Also, for blocks considered to have many residual signals cu_coded_flag is not signaled but may be inferred as a value of 1. Blocks considered to have few residual signals cu_coded_flag is not signaled but may be inferred as a value of 0.

When a specific condition is satisfied, cu_coded_flag may be signaled, and when the specific condition is not satisfied, cu_coded_flag may be inferred as a value of 1. As an example, when the number of intra prediction modes among multi-reference blocks signaled is numMHIntra, numMHIntra may be considered to determine a cu_coded_flag value. In other words, when the specific condition of FIG. 18 may be "if(numMHIntra = 0)." When the condition is satisfied, cu_coded_flag may be signaled, and when the condition is not satisfied, cu_coded_flag is not signaled but may be inferred as a value of 1.

As another example, the specific condition may be "if(width×height > 1024)." In other words, when a block size (width×height) satisfies the condition, cu_coded_flag may be signaled, and when the block size does not satisfy the condition, cu_coded_flag may be inferred as a value of 1. This is because a block with a smaller size may be assumed to have more residual signals (when there is no similar block, a block continues to be split). The foregoing two conditions may be taken into consideration together, and an aspect ratio of a block may also be considered in addition to a block size.

More specifically, referring to FIG. 18, a prediction mode type of the current block may be determined. In this case, it may be determined whether the prediction mode is an intra mode or an inter mode.

When the prediction mode is an intra mode, multi-reference blocks may not be applied (or allowed) to the block. In other words, multi-reference blocks may not exist for the block. Since intra modes have many residual signals due to their characteristic, the transform-related flag, that is, cu_coded_flag information, is not signaled but may always be inferred as a value of 1.

When the prediction mode is not an intra mode, a flag cu_skip_flag indicating whether the prediction mode is the skip mode may be parsed to determine whether the prediction mode is the skip mode.

When the prediction mode is not the skip mode, a flag general_merge_flag indicating whether the prediction mode is an inter mode or the merge mode may be parsed to determine whether the prediction mode is an inter mode or the merge mode.

When the prediction mode is the merge mode, multi-reference blocks may be applied to the block. Here, the multi-reference blocks may include intra modes and inter modes (AMVP and merge).

Since the skip mode and the merge mode are distinguished by the presence or absence of a residual signal, in the case of the merge mode, cu_coded_flag is not signaled but may be inferred as a value of 1 due to the presence of a residual signal.

When the prediction mode is the inter (AMVP) mode, multi-reference blocks may exist for the block. Here, the multi-reference blocks may include intra modes and the inter (AMVP and merge) modes.

When a specific condition is satisfied, cu_coded_flag may be signaled, and when the specific condition is not satisfied, cu_coded_flag may be inferred as a value of 1. As an example, when the number numMHIntra of intra prediction modes among multi-reference blocks signaled may be considered to determine a cu_coded_flag value. In this case, the specific condition may include a condition where the number of intra prediction modes is 0 (if(numMHIntra == 0)). When the specific condition is satisfied (i.e., when the number of intra prediction modes is 0 (numMHIntra == 0)), cu_coded_flag may be signaled, and when the specific condition is not satisfied (i.e., when the number of intra prediction modes is not 0), cu_coded_flag is not signaled but may be inferred as a value of 1.

As another example, the specific condition may be a block size. In this case, the specific condition may include a condition where a block size (width×height) is larger than a threshold size (1024) (if(width×height) > 1024). When the specific condition is satisfied (i.e., when the block size is larger than 1024), cu_coded_flag may be signaled, and when the specific condition is not satisfied (i.e., the block size is 1024 or less), cu_coded_flag may be inferred as a value of 1.

Since smaller block sizes involve more residual signals, the foregoing specific conditions may be taken into consideration together, and an aspect ratio of a block may also be considered in addition to a block size.

The above-described method may be applied to the IBC mode in the same manner. In other words, even when an IBC mode is applied to a regular block, MH-intra, MH-inter, and MH-IBC blocks may be applied. Also, the foregoing cu_coded_flag parsing/inference process may be applied depending on whether intra modes are applied as multi-reference blocks.

The following describes a cu_coded_flag parsing/inference method based on a specific condition when a prediction mode of a current block is an intra mode.

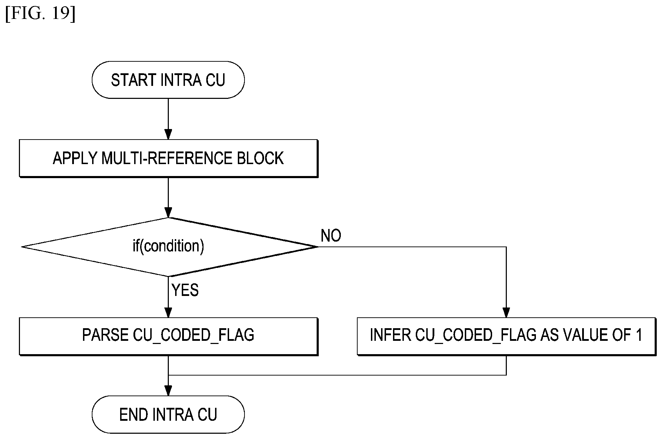

FIG. 19 is a flowchart illustrating a method of parsing a CU depending on whether a specific condition is satisfied when multi-reference blocks are applied, according to an embodiment.

When a prediction mode of a current block (CU) is an intra mode, MH-intra, MH-inter, and MH-IBC blocks which are multi-reference blocks may be applied. Where multi-reference blocks are applied, if a specific condition is satisfied, cu_coded_flag is not signaled but is inferred as a value of 1, which is an existing rule and may be changed to signal cu_coded_flag.

When the current block is an intra block, the specific condition may be the number of multi-reference blocks signaled. Even in the case of an intra block, when residual signals from the multi-reference blocks are sufficiently reduced, cu_coded_flag may have a value of 0. Therefore, when the number of blocks having an inter or IBC mode among the multi-reference blocks signaled is defined as numMHInter, the number may be considered to determine a cu_coded_flag value. In other words, the specific condition of FIG. 19 may be "if(numMHIntra > 0)." When the condition is satisfied, cu_coded_flag may be signaled, and when the condition is not satisfied, cu_coded_flag is not signaled but may be inferred as a value of 1.

As another example, the specific condition may be "if(width×height > 1024)." In other words, when a block size (width×height) satisfies the condition, cu_coded_flag may be signaled, and when the block size does not satisfy the condition, cu_coded_flag may be inferred as a value of 1. This is because a block with a smaller size may be assumed to have more residual signals. The foregoing two conditions may be taken into consideration together, and an aspect ratio of a block may also be considered in addition to a block size.

More specifically, referring to FIG. 19, where the current block is an intra mode and multi-reference blocks are applied, if a specific condition is satisfied, cu_coded_flag may be parsed, and if the specific condition is not satisfied, cu_coded_flag may be inferred as a value of 1. In this case, the specific condition may be the number of multi-reference blocks signaled. Even where the current block is an intra block, if residual signals from the multi-reference blocks are sufficiently reduced, cu_coded_flag may have a value of 0. Therefore, the number numMHInter of blocks having an inter or IBC mode among the multi-reference blocks signaled may be considered to determine a cu_coded_flag value. In this case, the specific condition may include a condition where the number of multi-reference blocks signaled is larger than 0 (if(numMHIntra > 0)). When the specific condition is satisfied (i.e., when the number of multi-reference blocks signaled is larger than 0), cu_coded_flag may be signaled, and when the specific condition is not satisfied (i.e., when the number of multi-reference blocks signaled is 0), cu_coded_flag is not signaled but may be inferred as a value of 1.

As another example, the specific condition may be a block size. In this case, the specific condition may include a condition where a block size (width×height) is larger than a threshold size (1024) (if(width×height) > 1024). When the specific condition is satisfied (i.e., when the block size is larger than 1024), cu_coded_flag may be signaled, and when the specific condition is not satisfied (i.e., the block size is 1024 or less), cu_coded_flag may be inferred as a value of 1.

Since smaller block sizes involve more residual signals, the foregoing specific conditions may be taken into consideration together, and an aspect ratio of a block may also be considered in addition to a block size.

The following describes interaction with other tools when multi-reference blocks exist. In particular, an MH-intra mode may be considered as a condition for determining BS during a deblocking filter process.

The deblocking filter process may include determining length of filtering to be applied to CU, TU, and sub-block boundaries, determining strength of a filter to be applied to each boundary, determining length and coefficients of a final filter by determining variation of each sample and whether each sample is an actual edge, and applying filtering. Determining strength of a filter in this process will be described below.

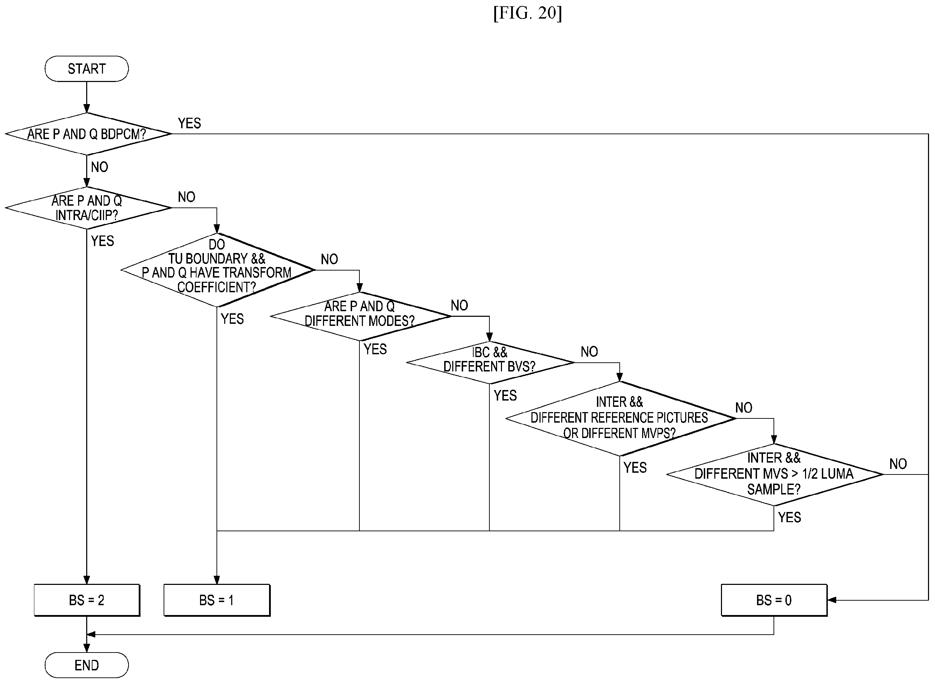

FIG. 20 is a flowchart illustrating a method of determining BS when multi-reference blocks are applied, according to an embodiment.

When a current block is Q and an adjacent block is P, BS is determined first in accordance with a prediction mode type of each block, and then an edge of a TB, whether a transform coefficient exists, a difference value between motion vectors, etc., may be considered to finally determine a BS value. Since intra modes involve a relatively large number of residual signals, it may be determined that discontinuity between blocks is high, generally leading to a high BS value. Similarly, the CIIP mode also includes an intra prediction block and thus is determined to have similar block characteristics to those of intra modes, leading to a high BS value.

In the present disclosure, multi-reference blocks including MH-intra blocks may be determined as blocks expected to have additional compression effect due to intra prediction blocks because many residual signals are included. Accordingly, a block including MH-intra may be determined as an intra block and thus assigned a large BS value.

When the current block Q and the adjacent block P are an intra mode or the CIIP mode or satisfy numMHIntra > 0, BS may be assigned 2. As defined above, numMHIntra may represent the number of intra mode blocks among multi-reference blocks signaled. Also, as a modified definition, numMHIntra may represent the number of MH-intra blocks that the corresponding block has. This may include not only signaled MH-intra modes but also inherited MH-intra modes.

Also, BS may be subdivided and defined as a value of 0 to 3. In this case, in intra modes, BS may be set to 3, and in a combined mode, BS may be set to 2. The combined mode may be one of the followings.

The CIIP mode
The GPM-intra mode
A mode obtained by combining multi-reference blocks when an inter/IBC mode is a regular block
A mode including MH intra when an inter/IBC mode is a regular block
Here, MH-intra may represent the number of signaled MH-intra modes including inherited MH-intra modes.
A mode obtained by combining multi-reference blocks when an intra mode is a regular block
A mode including MH-inter and MH-IBC when an intra mode is a regular block
Here, MH-inter and MH-IBC may be the number of signaled multi-reference blocks including inherited modes.

More specifically, referring to FIG. 20, it is determined whether block-based delta pulse code modulation (BDPCM) is applied to the current block Q and the adjacent block P.

When BDPCM is not applied to the current block Q and the adjacent block P, it may be determined whether the current block Q and the adjacent block P are an intra mode or the CIIP mode. When the current block Q and the adjacent block P are an intra mode or the CIIP mode, BS may be set to 2 (BS = 2).

When BDPCM is applied to the current block Q and the adjacent block P, BS may be set to 0 (BS = 0).

When the current block Q and the adjacent block P are not an intra mode or the CIIP mode, it may be determined whether the current block Q and the adjacent block P are an edge of a TB and whether the current block Q and the adjacent block P have a transform coefficient. When the current block Q and the adjacent block P are an edge of a TB and have a transform coefficient, BS may be set to 1 (BS = 1), or otherwise, it may be determined whether the current block Q and the adjacent block P are different modes. When the current block Q and the adjacent block P are different modes, BS may be set to 1 (BS = 1), or otherwise, it may be determined whether the current block Q and the adjacent block P are an IBC mode and have different BVs. When the current block Q and the adjacent block P are an IBC mode and have different BVs, BS may be set to 1 (BS = 1), or otherwise it may be determined whether the current block Q and the adjacent block P are an inter mode and have different reference pictures or different MVs. When the current block Q and the adjacent block P are an inter mode INTER and have different reference pictures or different MVs, BS may be set to 1 (BS = 1), or otherwise, it may be determined whether the current block Q and the adjacent block P are an inter mode and whether the different MVs are larger than a 1/2 luma sample. When the current block Q and the adjacent block P are an inter mode and the different MVs are larger than a 1/2 luma sample, BS may be set to 1 (BS = 1), or otherwise, BS may be set to 0 (BS = 0).

The following describes interaction with other tools when multi-reference blocks exist. In particular, a multi-reference condition may be considered as a condition for SBT application.

As shown in Table 9 below, a syntax table of Table 9 may show an SBT part in a syntactic structure of coding unit (). When a current block is not an intra mode, transform may be applied in sub-block units. As shown in the syntax table of Table 9 below, when the current block is a CIIP with intra characteristics and the GPM-intra mode, an SBT may not be applied. In the GPM-intra mode, an angle-based prediction block is partitioned, but one of two prediction blocks includes an intra prediction block.

In the present disclosure, MH-intra prediction blocks also have intra characteristics. Accordingly, whether an SBT is applied may be determined depending on the presence of MH-intra.

[Table 9]

| coding_unit( x0, y0, cbWidth, cbHeight, cqtDepth, treeType, modeType ) { |
|---|
| ...... |
| if( CuPredMode[ chType ][ x0 ][ y0 ] != MODE_INTRA && !pred_mode_plt_flag &&     general_merge_flag[ x0 ][ y0 ] == 0 ) |
|     **cu_coded_flag** |
| if( cu_coded_flag ) { |
|     if( CuPredMode[ chType ][ x0 ][ y0 ] == MODE_INTER && sps_sbt_enabled_flag &&     !gpm_intra_flag [ x0 ][ y0 ] &&     **numMHIntra = 0 &&**     !ciip_flag[ x0 ][ y0 ] && cbWidth <= MaxTbSizeY && cbHeight <= MaxTbSizeY ) { |
|         allowSbtVerH = cbWidth >= 8 |
|         allowSbtVerQ = cbWidth >= 16 |
|         allowSbtHorH = cbHeight >= 8 |
|         allowSbtHorQ = cbHeight >= 16 |
|         if( allowSbtVerH ‖ allowSbtHorH ) |
|           **cu_sbt_flag** |
|         if( cu_sbt_flag) { |
|           if( ( allowSbtVerH ‖ allowSbtHorH ) && ( allowSbtVerQ ‖ allowSbtHorQ ) ) |
|             **cu_sbt_quad_flag** |
|           if( (cu_sbt_quad_flag && allowSbtVerQ && allowSbtHorQ) ‖             (!cu_sbt_quad_flag && allowSbtVerH && allowSbtHorH)) |
|             **cu_sbt_horizontal_flag** |
|             **cu_sbt_pos flag** |
|         } |
|       } |
| ...... |
| } |

More specifically, when numMHIntra > 0 is satisfied, an SBT may not be applied. In other words, when numMHIntra == 0, SBT-related syntax information may be included. As defined above, numMHIntra may represent the number of prediction blocks that are intra modes among signaled multi-reference blocks.

The following describes operations for multi-reference blocks when LIC is applied to a current block. LIC is a method of generating a prediction block using parameters $\alpha$ and $\beta$ derived from pixel difference values between a current block and a template adjacent to each reference block. In other words, when a reference sample is p[x], a prediction sample of the current block may be derived as $\alpha$*p[x]+$\beta$.

Applying LIC to the current block may represent that there is a local change between a reference block existing in a reference picture and the current block. In this case, due to LIC characteristics of deriving parameters on the basis of a template, a final prediction block may be generated by considering not only a prediction block in the reference picture but also variation of an adjacent sample. LIC may be applied to IBC modes as well as inter modes.

The following describes a modified method of applying multi-reference blocks when LIC is applied.

When LIC is applied to the current block, multi-reference blocks signaled may not be allowed. In particular, intra blocks may not be allowed as multi-reference blocks.

When LIC is applied to the current block, multi-reference blocks inherited may not be allowed. In particular, intra blocks may not be allowed as multi-reference blocks inherited.

When LIC is applied to the current block, LIC parameters may be derived and applied for a multi-reference block. As shown in Equation 9 below, when LIC is applied to a regular block p0[x], the regular block to which LIC is applied may be defined as p0'[x], and when LIC is applied to a multi-reference block p2[x], the multi-reference block to which LIC is applied may be defined as p2'[x]. These may be used to derive a final prediction block p[x]. In other words, a method of deriving a final prediction block may be presented as shown in Equation 9 below.

[Equation 9]

$$p0'[x] = \alpha0*p0[x]+\beta0$$
$$p2'[x] = \alpha2*p2[x]+\beta2$$
$$p[x] = (1-w) * p0'[x] + w* p2'[x]$$

In Equation 9, a case where a final prediction block derivation process is applied to a unidirectional prediction block has been described as an example for convenience of description. However, the present disclosure is not limited thereto, and an identical/similar method may also be applied to bidirectional prediction blocks.

When LIC is applied to the current block, LIC parameters may be derived and applied to multi-reference blocks. Here, additional LIC flag signaling may not be required, and weight information of the multi-reference blocks may not be included. When the weight information of the multi-reference blocks is not included, default values may be used as weights for a weighted sum of a regular (prediction) block and the multi-reference blocks. Here, the default values may be an equal-weight, or different default values may be set for mode types of the multi-reference blocks. As an example, when the multi-reference blocks are inter modes, the default values may be changed and applied as an equal-weight (16/32), and when the multi-reference blocks are intra modes, the default values may be changed and applied as an equal-weight (14/32).

When LIC is applied to the current block, weight information candidates of intra blocks serving as multi-reference blocks may vary. Since LIC parameters are derived using a template, LIC parameters may partially reflect information on the adjacent block. As an example, weight information defined as {1/4, -1/8} for multi-reference blocks may be changed and defined as {1/16, 1/32}, etc., for use.

Where LIC is applied to the current block, if a difference value between the parameter $\alpha$ ($\alpha0$) of the regular block and an LIC parameter $\alpha$ ($\alpha2$) of multi-reference blocks is smaller than a threshold T0, the multi-reference blocks may be applied. In particular, this may be applied to multi-reference blocks inherited. When multi-reference blocks inherited are inter or IBC modes, the multi-reference blocks may not be applied to the current block under a specific condition. The specific condition may include a case where an absolute value of a difference between the parameter $\alpha$ ($\alpha0$) of the regular block and the LIC parameter $\alpha$ ($\alpha2$) of the multi-reference blocks is smaller than the threshold T0 ($|\alpha0 - \alpha2| < T0$). This may also be applied to the parameter $\beta$ in an identical/similar manner. When a difference value of the parameter $\beta$ between two blocks is smaller than a threshold T1, multi-reference blocks may be applied. In this case, the specific condition may include a case where an absolute value of a difference between the parameter $\beta$ ($\beta0$) of the regular block and the LIC parameter $\beta$ ($\beta2$) of the multi-reference blocks is smaller than the threshold T1 ($|\beta0 - \beta2| < T1$).

When LIC is applied to the current block, weights of intra blocks serving as multi-reference blocks may be set larger. Due to the application of LIC, adjacent samples of the current block may be more accurate than adjacent samples of an inter/IBC prediction block. In this case, when a weight for MH-intra of a block to which LIC is not applied is 16/32, a weight for MH-intra of a block to which LIC is applied may be set to a larger value such as 20/32. This may be modified and limited to only a case where intra blocks serve as multi-reference blocks inherited, and the like.

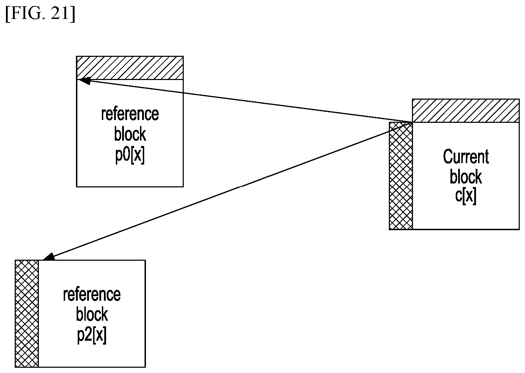

When LIC is applied to the current block, a template area of the regular reference block p0 may differ from a template area of the multi-reference block P2. This will be described with reference to FIG. 21.

FIG. 21 is a diagram showing examples of a template area of a regular reference block and a template area of a multi-reference block according to an embodiment.

Referring to FIG. 21, when a template area used to derive a parameter of p0 is limited to the above side of the regular block p0[x], a template area which will be used to derive a parameter of p2 may be modified and limited to the left side, etc., of the multi-reference block p2[x].

Where multi-reference blocks exist, if signaling information of the multi-reference blocks precedes LIC, LIC for the current block may be limited. This may be modified and applied depending on the type of multi-reference blocks. As an example, when MH-intra is included in the multi-reference blocks, LIC of the current block may be limited.

The following describes operations for multi-reference blocks when OBMC is applied to a current block. OBMC is a method of removing, from a block edge, discontinuity caused by compensating motion using a motion vector of each prediction block. When a block to which OBMC is applied has a different motion vector from an adjacent block due to a weighted sum of a prediction block obtained using a motion vector of the adjacent block and a prediction block obtained using the motion vector of the current block, discontinuity between the blocks may be effectively removed. OBMC may be applied to not only inter modes but also IBC modes.

The present disclosure describes a modified method of applying multi-reference blocks when OBMC is applied to the current block.

When OBMC is applied to the current block, multi-reference blocks signaled may not be allowed. In particular, intra blocks may not be allowed as multi-reference blocks. Since an intra block uses a prediction mode derived from an adjacent sample, discontinuity between blocks may be relatively removed.

When OBMC is applied to the current block, multi-reference blocks inherited may not be allowed. In particular, intra blocks may not be allowed as multi-reference blocks. Since an intra block uses a prediction mode derived from an adjacent sample, discontinuity between blocks may be relatively removed.

When OBMC is applied to the current block, weight information of the multi-reference blocks may not be included. When the weight information of the multi-reference blocks is not included, default weight values may be used for a weighted sum of a regular block (i.e., the regular prediction block) and the multi-reference blocks. Here, the default values may be an equal-weight, or different default values may be set depending on mode types of the multi-reference blocks. As an example, when the multi-reference blocks are inter modes, the default values may be changed and applied as an equal-weight (16/32), and when the multi-reference blocks are intra modes, the default values may be changed and applied as an equal-weight (14/32).

When OBMC is applied to the current block, weight information candidates of intra blocks serving as multi-reference blocks may vary. The application of OBMC may eliminate discontinuity with adjacent samples to a certain extent. As an example, weight information defined as {1/4, -1/8} for multi-reference blocks may be changed and defined as {1/16, 1/32}, etc., for use.

Where multi-reference blocks exist, if signaling information of the multi-reference blocks precedes OBMC, OBMC for the current block may be limited. Alternatively, this may be modified and applied to limit OBMC when multi-reference blocks exist and an intra block is included.

Where multi-reference blocks exist, if signaling information of the multi-reference blocks precedes OBMC, OBMC performed in units of CUs of the current block may be limited, and OBMC performed in sub-block units may be maintained.

The following describes a method of selecting an LFNST kernel when LFNST is applicable to multi-reference blocks. In the case of multi-reference blocks, one or more intra modes may exist in the reference blocks, and the multi-reference blocks may be considered at the same time as the intra modes. However, in some cases, characteristics of residual signals may differ from those of intra modes defined in LFNST. Therefore, when a regular block (i.e., a regular reference block) is an inter or IBC mode and multi-reference blocks exist, characteristics of residual signals may be efficiently taken into consideration by applying whether an LFNST kernel is selected (or applied) as described below.

A case where all the multi-reference blocks are intra modes or include one or more intra modes:

When directions of the intra modes are similar, an intra mode representing the intra modes may be determined, and an LFNST kernel may be used on the basis of the mode. When directionality of the intra modes is inconsistent, an LFNST kernel corresponding to an intra mode of a first multi-reference block may be used. Alternatively, when the directionality of the modes is inconsistent, LFNST may not be applied, or a kernel of the planar mode may be used.

A case where all the multi-reference blocks are inter/IBC modes:

LFNST may not be applied, or a kernel of the planar mode may be used.

A case where the multi-reference blocks include one intra mode and inter/IBC modes:

An LFNST kernel may be selected on the basis of the given intra mode.

When a regular block is an intra mode and multi-reference blocks exist, characteristics of residual signals may be efficiently taken into consideration by applying whether an LFNST kernel is selected (or applied) as described below.

A case where all the multi-reference blocks are intra modes or include one or more intra modes:

An LFNST kernel in accordance with the intra mode of the regular block may be used.

Alternatively, when the intra mode of the regular block and each intra mode have similar directions, an intra mode representing the intra modes may be determined, and an LFNST kernel may be used on the basis of the mode. Alternatively, when directionality of the intra modes is inconsistent, an LFNST kernel in accordance with the intra mode of the regular block may be used, LFNST may not be applied, or a kernel of the planar mode may be used.

A case where all the multi-reference blocks are inter/IBC modes:
An LFNST kernel in accordance with the intra mode of the regular block may be used.

Alternatively, LFNST may not be applied, or a kernel of the planar mode may be used.

A case where the multi-reference blocks include one intra mode and inter/IBC modes:
An LFNST kernel may be used in accordance with the intra mode of the regular block.

Alternatively, when the intra mode of the regular block and intra modes of the multi-reference blocks have similar directions, an intra mode representing the intra modes may be determined, and an LFNST kernel may be used on the basis of the mode. Otherwise, LFNST may not be applied, or a kernel of the planar mode may be used.

Alternatively, when the intra mode of the regular block and intra modes of the multi-reference blocks have similar directions, a kernel in accordance with the intra mode of the regular block may be used, or otherwise, a kernel of the planar mode may be used.

The following describes in further detail 1) a method of determining whether to parse or infer a transform-related flag, 2) a method of determining filtering strength, and 3) a method of determining whether to apply an SBT when intra blocks exit as a current block and/or multi-reference blocks. Also, the following describes in further detail 4) a method of determining whether to allow multi-reference blocks when LIC is applied to the current block, 5) a method of determining whether to allow multi-reference blocks when OBMC is applied to the current block, and 6) a method of determining an LFNST kernel when LFNST is applicable to multi-reference blocks. The methods described below may be performed by the encoding apparatus 200 and/or the decoding apparatus 300.

**Embodiment 1: a method of determining whether to parse or infer a transform-related flag when intra blocks exist as current block and/or multi-reference blocks**

When a current block is the inter (AMVP) mode and multi-reference blocks exist, whether to parse or infer a transform-related flag may be determined depending on whether a first condition is satisfied. The transform-related flag represents whether the current block includes transform and residual information, and may be cu_coded_flag. The first condition is a condition for determining whether to parse or infer the transform-related flag, and may include a condition based on the number numMHP of multi-reference blocks, the number numMHIntra of reference blocks which are intra modes among multi-reference blocks signaled, or a block size (i.e., a CU size). For example, the first condition may include a case where numMHP is 0 (if(numMHP == 0)), a case where numMHIntra is 0 (if(numMHIntra == 0)), and/or a case where a block size (width×height) is larger than a specific value (if (width×height) > 1024). The specific value may be, but is not limited to, 1024 and may be a value for determining a block with few residual signals. According to various embodiments, the first condition may further include a condition based on an aspect ratio of a block.

When the first condition is satisfied (i.e., numMHP is 0), cu_coded_flag may be parsed, and when the first condition is not satisfied (i.e., numMHP is larger than 0), cu_coded_flag may be inferred as a value of 1. In this case, multi-reference blocks signaled and multi-reference blocks inherited may exist. However, the types and number of multi-reference blocks are unknown during a syntax parsing process. Accordingly, when the number of multi-reference blocks signaled is larger than 0, the current block may be determined as a block with a large amount of information to be signaled due to many residual signals. When the current block is determined as a block with many residual signals, cu_coded_flag may be inferred as a value of 1 without being signaled, and when the number of multi-reference blocks signaled is 0, cu_coded_flag may be parsed as a value of 0 or 1.

As another example, when the first condition is satisfied (i.e., numMHIntra is 0), the current block is determined as a block with few residual signals, and thus cu_coded_flag may be parsed. When the first condition is not satisfied (i.e., numMHIntra is larger than 0), the current block is determined as a block with many residual signals, and thus cu_coded_flag may be inferred as a value of 1. In other words, cu_coded_flag is inferred as a value of 1 without being signaled.

As another example, when the first condition is satisfied (i.e., a width×height value is larger than 1024), cu_coded_flag may be parsed, and when the first condition is not satisfied (i.e., the width×height value is 1024 or less), cu_coded_flag may be inferred as a value of 1.

According to various embodiments, conditions included in the first condition may be considered together. For example, the if(numMHP == 0) condition, the if(numMHIntra == 0) condition, and/or the if (width×height) > 1024) condition may be taken into consideration together, and whether to parse or infer the transform-related flag may be determined depending on whether these conditions are satisfied.

According to various embodiments, when the current block is the merge mode and multi-reference blocks exists, cu_coded_flag may be inferred as a value of 1 without being signaled. When the current block is the merge mode, residual signals are included, and thus cu_coded_flag may be inferred as a value of 1 without being signaled.

According to various embodiments, when the current block is the skip mode, no residual signal is included, and thus cu_coded_flag may be inferred as a value of 0 without being signaled.

According to various embodiments, when the current block is an intra mode, multi-reference blocks do not exist, and thus cu_coded_flag may be inferred as a value of 1 without being signaled.

According to various embodiments, the following describes a method of parsing or inferring the transform-related flag where the current block is an intra block if multi-reference blocks exist.

Where the current block is an intra block, if multi-reference blocks exist, whether to parse or infer the transform-related flag may be determined under a predetermined second condition. In other words, according to the basic method, when the current block is an intra block, cu_coded_flag is inferred as a value of 1 without being signaled, whereas according to various embodiments, whether to parse cu_coded_flag may be determined depending on whether the second condition is satisfied. Here, the second condition includes a condition based on the number numMHInter of blocks which are inter/IBC modes among multi-reference blocks signaled or a block size. For example, the second condition may include a case where numMHInter is larger than 0 (if(numMHInter > 0) and/or a case where a block size (width×height) is larger than a specific value (e.g., 1024) (if (width×height) > 1024). In this case, even where the current block is an intra mode, if multi-reference blocks include a block which is an inter mode or an IBC mode, it may be determined that residual signals are sufficiently reduced, and thus whether to parse or infer cu_coded_flag under this second condition, According to various embodiments, the second condition may further include a condition based on an aspect ratio of a block.

When the second condition is satisfied (i.e., numMHIntra is larger than 0), cu_coded_flag may be parsed, and when the second condition is not satisfied (i.e., numMHIntra is 0), cu_coded_flag may be inferred as a value of 1 without being signaled.

As another example, when the second condition is satisfied (i.e., a width×height value is larger than 1024), cu_coded_flag may be parsed, and when the second condition is not satisfied (i.e., the width×height value is 1024 or less), cu_coded_flag may be inferred as a value of 1 without being signaled In this case, since smaller block sizes may be determined to involve more residual signals, when the block size may be determined to involve many residual signals, cu_coded_flag may be inferred as a value of 1 without being signaled.

According to various embodiments, the two conditions included in the second condition may be considered together. For example, the if(numMHInter > 0) condition and the if (width×height) > 1024) condition may be taken into consideration together to determine whether to parse or infer cu_coded_flag.

## Embodiment 2: a method of determining filtering strength used for filtering based on the fact that multi-reference blocks are intra modes

When multi-reference blocks exist, whether the multi-reference blocks are intra modes (MH-intra) may be considered as a condition for determining filtering strength during a deblocking filtering process.

During a filtering process employing a deblocking filter, BS of an edge may be first determined in accordance with prediction modes of a current block and each of adjacent blocks which are adjacent to the current block, and then a BS value may be finally determined by considering whether the block edge is a transform block edge, whether a transform coefficient exists, a difference value between motion vectors, and the like.

When the multi-reference blocks are intra modes, the current block and/or an adjacent block include many residual signals. Accordingly, the current block may be determined as a block expected to have additional compression effect. In this case, the current block whose multi-reference blocks which are intra modes exist, and/or the adjacent block may be determined as an intra block, and a BS value may be determined (or set or assigned) based thereon.

According to an embodiment of the present disclosure, the BS value may be determined on the basis of prediction information related to the current block, a prediction block, or the multi-reference blocks. For example, the prediction information may include information on a prediction mode applied to the current block, information on a generation method (or generation tool) for generating a prediction block, and/or information on a prediction mode applied to the multi-reference blocks. For example, the prediction information may include information indicating whether the CIIP mode is applied to the current block.

When a specific condition is satisfied, the BS value may be set to a first value. The specific condition may include a case where the current block and/or the adjacent block are an intra mode or the CIIP mode, or a case where the number numMHIntra of intra mode blocks among the multi-reference blocks is larger than 0. Here, the first value is the relatively largest value within a specific range and may be, for example, 2 or 3, but is not limited thereto. As an example, when the BS value has a range of 0 to 2, the largest value may be 2 and the smallest value may be 0. As another example, when the BS value has a range of 0 to 3, the largest value may be 3 and the smallest value may be 0. According to various embodiments, in addition to the foregoing definition, numMHIntra may represent the number of (reference) blocks which are intra modes among multi-reference blocks signaled or the number of (reference) blocks which are intra modes among multi-reference blocks inherited.

Where BS values are within the range of 0 to 3, if the current block and/or the adjacent block are an intra mode, the BS value may be set to 3, and if the current block and/or the adjacent block are an intra mode or the prediction block is a combined mode, the BS value may be set to 2. Here, the combined mode may be the CIIP mode, the GPM-intra mode, a mode in which multi-reference blocks are combined with a regular block (i.e., a regular reference block) when the regular block is an inter/IBC mode, a mode including blocks which are intra modes (MH-intra) among multi-reference blocks signaled or inherited when a regular block is an inter/IBC mode, a mode in which multi-reference blocks are combined with a regular block when the regular block is an intra mode, and/or a mode including blocks which are inter modes (MH-inter) and IBC modes (MH-IBC) among multi-reference blocks signaled or inherited when a regular block is an intra mode.

According to various embodiments, it may be determined whether the current block and/or the adjacent block are a BDPCM mode, and when the current block and/or the adjacent block are the BDPCM mode, the BS value may be set to 0. Otherwise, it may be determined depending on whether the current block and/or the adjacent block are an intra mode or whether the prediction block is the CIIP mode.

When the current block and/or the adjacent block are an intra mode or the prediction block is the CIIP mode, the BS value may be set to 2. Otherwise, it may be determined depending on whether the block edge is a transform block edge and whether the current block and/or the adjacent block have a transform coefficient.

When the block edge is a transform block edge and the current block and/or the adjacent block have a transform coefficient, the BS value may be set to 1. Otherwise, it may be determined whether the current block and/or the adjacent block are different modes.

When the current block and/or the adjacent block are different modes, the BS value may be set to 1. Otherwise, it may be determined whether the current block and/or the adjacent block are an IBC mode and have different BVs.

When the current block and/or the adjacent block are an IBC mode and have different BVs, the BS value may be set to 1. Otherwise, it may be determined whether the current block and/or the adjacent block are an inter mode and have different reference pictures or different motion vectors.

When the current block and/or the adjacent block are an inter mode and have different reference pictures or different motion vectors, the BS value may be set to 1. Otherwise, the BS value may be determined depending on whether the current block and/or the adjacent block are an inter mode and the different motion vectors are larger than a 1/2 luma sample. When the current block and/or the adjacent block are an inter mode and the different motion vectors are larger than a 1/2 luma sample, the BS value may be set to 1. Otherwise, the BS value may be set to 0.

## Embodiment 3: a method of determining whether to apply an SBT depending on whether multi-reference blocks which are intra modes exist

When a current block is not an intra mode, an SBT may be applied (or allowed) to the current block. Also, since the CIIP mode and the GPM-intra mode include intra mode characteristics, an SBT may not be applied.

When a block which is an intra mode (MH-intra) exists among multi-reference blocks, intra mode characteristics are included. Accordingly, in the present disclosure, whether to apply an SBT may be determined depending on whether an MH-intra block exists.

In other words, whether to apply an SBT may be determined under a specific condition for determining whether an MG-intra block exists. Here, the specific condition may be based on the number numMHIntra of blocks which are intra modes among multi-reference blocks. For example, the specific condition may include a case where numMHIntra is larger than 0 (if(numMHIntra > 0)).

When the specific condition is satisfied (i.e., numMHIntra is larger than 0), no SBT may be applied, and SBT-related syntax information may not be included in a CU syntax structure as shown in Table 9.

When the specific condition is not satisfied (i.e., numMHIntra is 0), an SBT may be applied, and SBT-related syntax information may be included in the CU syntax structure of Table 9.

## Embodiment 4: a method of determining whether to allow multi-reference blocks when LIC is applied to the current block

Applying LIC to a current block may represent that there is a local illumination change between a reference block existing in a reference picture and the current block. Since LIC generates a prediction block using a scaling factor and an offset which are parameters derived from pixel difference values between the current block and a template adjacent to each reference block, not only an illumination change of the reference block in the reference picture but also an illumination change of an adjacent block may be considered together to generate a final prediction block.

In other words, when LIC is applied to the current block, a process of generating a final prediction block may include applying LIC to a regular block (i.e., a regular reference block) P0[x] to generate a regular block P0'[x] to which LIC has been applied, applying LIC to an additional reference block P2[x] to generate an additional reference block P2'[x] to which LIC has been applied, and calculating a weighted sum of P0'[x] and P2'[x] to generate the final prediction block P[x].

Here, a case where a unidirectional prediction block (e.g., P0 and P2 of FIG. 8) is applied is described as an example, but an identical/similar method may also be applied to a case where a bidirectional prediction block is applied.

When LIC is applied to the current block, weights for calculating a weighted sum of P0'[x] and P2'[x] may be default values. These default values may be, but are not limited to, an equal-weight, and different weight values may be included depending on mode types of multi-reference blocks. As an example, when the multi-reference blocks are inter modes (which may indicate both MH-merge and MH-AMVP modes), the default values may have an equal-weight (16/32), and when the multi-reference blocks are intra modes, the default values may be changed and applied as an equal-weight (14/32).

According to various embodiments, when LIC is applied to the current block, LIC parameters may be derived using multi-reference blocks. Here, additional LIC flag signaling may not be required, and weight information of the multi-reference blocks may not be included (in the foregoing encoding information). When the weight information of the multi-reference blocks is not included, default values may be used as weights for a weighted sum of a regular block and the multi-reference blocks in an identical/similar manner to that described above. Signaling information for multi-reference blocks (e.g., in the MH-merge mode, MVP indices, weight indices, etc.) may exist, and when an LIC flag of the current block is true, LIC and a weighted sum are partially complementary to each other. Accordingly, the amount of information signaled can be reduced by omitting information such as weight indices of the multi-reference blocks.

According to various embodiments, when LIC is applied to the current block, weight information of intra blocks serving as multi-reference blocks may include different candidate values compared to weight information of intra blocks serving as multi-reference blocks when LIC is not applied. Since LIC parameters are derived using a template area of the regular reference block, information (illumination, resolution, etc.) of the adjacent block is partially reflected. Therefore, for example, weight information defined as {1/4, -1/8} for the multi-reference blocks may be changed and defined as {1/16, 1/32}, etc., for use.

According to various embodiments, where LIC is applied to the current block, if a difference value between the scaling factor value $\alpha0$ of the regular block and the scaling factor value $\alpha2$ of multi-reference blocks is smaller than the first threshold T0, the multi-reference blocks may be applied. In particular, this may be applied to multi-reference blocks inherited. When multi-reference blocks inherited are inter or IBC modes, the multi-reference blocks may or may not be applied to the current block under a specific condition ($|\alpha0 - \alpha2| < $ T0). When the specific condition is satisfied (i.e., $|\alpha0 - \alpha2|$ is smaller than T0), the multi-reference blocks inherited may be applied to the current block. When the specific condition is not satisfied (i.e., $|\alpha0 - \alpha2|$ is T0 or more), the multi-reference blocks inherited may not be applied to the current block. This may be applied to the offset $\beta$ in an identical/similar manner. In other words, when a difference value between the offset value $\beta0$ of the regular block and the offset value $\beta2$ of multi-reference blocks is smaller than the second threshold T1, the multi-reference blocks may be applied. The multi-reference blocks inherited may or may not be applied to the current block under a specific condition ($|\beta0 - \beta2| < $ T1). When the specific condition is satisfied (i.e., $|\beta0 - \beta2|$ is smaller than T1), the multi-reference blocks inherited may be applied to the current block. When the specific condition is not satisfied (i.e., $|\beta0 - \beta2|$ is T1 or more), the multi-reference blocks inherited may not be applied to the current block.

According to various embodiments, when LIC is applied to the current block, weights of intra blocks serving as multi-reference blocks may be set larger than weights of intra blocks serving as multi-reference blocks when LIC is not applied. Due to the application of LIC, adjacent samples (or adjacent blocks) of the current block may be more accurate than adjacent blocks of an inter/IBC block. For this reason, a weight for an MH_intra block to which LIC is applied may be set larger than a weight for an MH_intra block to which LIC is not applied. For example, when a weight for an MH_intra block to which LIC is not applied is 16/32, a weight for a MH_intra block to which LIC is applied may be set to 20/32. This may be modified and limited to only a case where intra blocks serve as multi-reference blocks inherited, and the like

According to various embodiments, when LIC is applied to the current block, a template area of the regular reference block p0 used for deriving LIC parameters may differ from a template area of the multi-reference block p2. For example, as shown in FIG. 21., a template area used for deriving LIC parameters of p0 may be limited to an above template area of p0. Also, a template area used for deriving LIC parameters of p1 may be limited to a left template area of p2.

According to various embodiments, when LIC is applied to the current block, multi-reference blocks signaled may not be allowed (applied) for the current block. In particular, intra blocks may not be allowed as multi-reference blocks. In other words, for the current block to which LIC is applied, no intra block may exist among multi-reference blocks.

According to various embodiments, when LIC is applied to the current block, multi-reference blocks inherited may not be allowed for the current block. In particular, no intra block may be allowed as multi-reference blocks inherited. In other words, for the current block to which LIC is applied, no intra block may exist among multi-reference blocks inherited.

According to various embodiments, where multi-reference blocks exist, if signaling/parsing information of the multi-reference blocks precedes LIC, LIC for the current block may be limited. This may be changed depending on types of multi-reference blocks. As an example, when intra blocks exist as multi-reference blocks, LIC for the current block may be limited.

**Embodiment 5: a method of determining whether to allow multi-reference blocks when OBMC is applied to the current block**

As described above, when OBMC is applied, discontinuity at a block edge (boundary) may be removed by calculating a weighted sum of a prediction block obtained using a motion vector of an adjacent block and a prediction block obtained using a motion vector of a current block. Here, when the motion vectors have different motion vector values, discontinuity between blocks may be efficiently removed.

When OBMC is applied to the current block, multi-reference blocks signaled may not be allowed for the current block. In particular, intra blocks may not be allowed as multi-reference blocks. In other words, for the current block to which OBMC is applied, no intra block may exist among multi-reference blocks. Since an intra block uses a prediction mode derived from an adjacent sample, discontinuity between blocks may be relatively removed.

According to various embodiments, when OBMC is applied to the current block, multi-reference blocks inherited may not be allowed for the current block. In particular, intra blocks may not be allowed as multi-reference blocks inherited. In other words, for the current block to which OBMC is applied, no intra block may exist among multi-reference blocks inherited.

According to various embodiments, when OBMC is applied to the current block, weight information for multi-reference blocks may not be included in the foregoing encoding information. When the weight information is not included in the foregoing encoding information, default weight values may be used for a weighted sum of a regular block (i.e., a regular prediction block) and the multi-reference blocks. The default values may be, but is not limited to, an equal-weight, or different default values may be included depending on mode types of the multi-reference blocks. As an example, when the multi-reference blocks are inter modes, the default values may be have an equal-weight of 16/32, and when the multi-reference blocks are intra modes, the default values may be changed and applied as an equal-weight such as 14/32.

According to various embodiments, when OBMC is applied to the current block, weight information of intra blocks serving as multi-reference blocks may include different candidate values. This is because the application of OBMC may eliminate discontinuity with an adjacent block to a certain extent. For this reason, weight information defined as {1/4, -1/8} for multi-reference blocks may be changed and defined as {1/16, 1/32}, etc., for use.

According to various embodiments, where multi-reference blocks exist, if signaling information of the multi-reference blocks precedes OBMC, IBMC for the current block may be limited. According to various embodiments, this may be modified and applied to limit OBMC when intra blocks exist as multi-reference blocks.

According to various embodiments, where multi-reference blocks exist, if signaling information of the multi-reference blocks precedes OBMC, OBMC performed in units of CUs of the current block may be limited, and OBMC performed in sub-block units may be maintained.

**Embodiment 6: a method of determining an LFNST kernel when secondary transform (LFNST) is applicable to multi-reference blocks**

When multi-reference blocks exist, one or more reference blocks which are intra modes may exist among the multi-reference blocks. As an example, all the multi-reference blocks are intra modes, or one or more reference blocks which are intra modes may exist. As another example, none of the multi-reference blocks may be an intra mode. As another example, a regular block (i.e., a regular reference block) may be an inter or IBC mode, and one or more multi-reference blocks which are intra modes may exist. As another example, the regular block may be an intra mode, and one or more multi-reference blocks which are intra modes may exist. In this case, a method of determining a transform kernel for inverse transform will be described in detail.

A case where all the multi-reference blocks are intra modes or one or more intra modes are included:
A representative intra mode may be determined on the basis of the directionality of each intra mode, and an LFNST kernel based on the representative intra mode may be used as a transform kernel. As an example, a representative intra mode may be determined among the intra modes on the basis of matching of the directionality of each intra mode, and an LFNST kernel based on the representative intra mode may be used as a transform kernel.

Any one intra mode may be selected on the basis of the directionality of each intra mode, and an LFNST kernel based on the selected intra mode may be used as a transform kernel. As an example, when the directionality of each intra mode is inconsistent, an LFNST kernel based on an intra mode of any one reference block among the multi-reference blocks may be used as a transform kernel. For example, any one reference block may be a first reference block among the multi-reference blocks.

LFNST may not be applied on the basis of the directionality of each intra mode, or a kernel of the planar mode may be used as a transform kernel. As an example, when the directionality of a mode is inconsistent, LFNST may not be applied, or the kernel of the planar mode may be used as a transform kernel.

2) A case where all the multi-reference blocks are inter/IBC modes:
LFNST may not be applied, or a kernel of the planar mode may be used as a transform kernel.

3) A case where the multi-reference blocks include one intra mode and inter/IBC modes:
An LFNST kernel based on the intra mode may be used as a transform kernel.

4) A case where the regular block is an intra mode and all the multi-reference blocks are intra mode or include one or more intra modes:
An LFNST kernel based on the intra mode of the regular block may be used as a transform kernel.

A representative intra mode may be determined on the basis of the directionality of the intra mode of the regular block and each intra mode, and an LFNST kernel based on the representative intra mode may be used as a transform kernel. As an example, based on matching between the directionality of the intra mode of the regular block and the directionality of each intra mode, a representative intra mode may be determined among the intra modes, and an LFNST kernel based on the representative intra mode may be used as a transform kernel.

An LFNST kernel based on the intra mode of the regular block may be used as a transform kernel on the basis of the directionality of the intra mode of the regular block and each intra mode. As an example, when the directionality of the intra mode of the regular block and each intra mode is inconsistent, the LFNST kernel based on the intra mode of the regular block may be used as a transform kernel.

Based on the directionality of the intra mode of the regular block and each intra mode, LFNST may not be applied, or a kernel of the planar mode may be used as a transform kernel. As an example, when the directionality of the intra mode of the regular block and each intra mode is inconsistent, LFNST may not be applied, or the kernel of the planar mode may be used as a transform kernel.

5) A case where the regular block is an intra mode and all the multiple reference block are inter/IBC modes:
An LFNST kernel based on the intra mode of the regular block may be used as a transform kernel.

LFNST may not be applied, or a kernel of the planar mode may be used as a transform kernel.

6) A case where the regular block is an intra mode and the multiple reference block include one intra mode and inter/IBC modes:
An LFNST kernel based on the intra mode of the regular block may be used as a transform kernel.

Based on matching between the directionality of the intra mode of the regular block and the directionality of each intra mode, a representative intra mode may be determined among the intra modes, and an LFNST kernel based on the representative intra mode may be used as a transform kernel.

When the directionality of the intra mode of the regular block is similar to the directionality of each intra mode, an LFNST kernel based on the intra mode of the regular block may be used a transform kernel.

When the directionality of the intra mode of the regular block and each intra mode is inconsistent, LFNST may not be applied, or the kernel of the planar mode may be used as a transform kernel.

In the above-described embodiments, methods are described on the basis of flowcharts as a series of steps or blocks, but the embodiments are not limited to the order of steps. Some steps may occur in a different order or concurrently with other steps. Also, those of ordinary skill in the art will understand that steps shown in the flowcharts are not exclusive and that other steps may be included or one or more steps of the flowcharts may be deleted without affecting the scope of embodiments of the present document.

The methods according to the above-described embodiments of the present document may be implemented in the form of software, and an encoding apparatus and/or a decoding apparatus according to the present document may be included in a device for performing image processing, for example, a television (TV), a computer, a smartphone, a set-top box, a display device, and the like.

When embodiments of the present document are implemented in software, the above-described methods may be implemented using modules (processes, functions, etc.) that perform the functions described above. The modules may be stored in memory and executed by a processor. The memory may be inside or outside the processor and connected to the processor via various well-known means. The processor may include an application specific integrated circuit (ASIC), another chipset, a logic circuit, and/or a data processing device. The memory may include a read-only memory (ROM), a random access memory (RAM), a flash memory, a memory card, a storage medium, and/or other storage devices. In other words, the embodiments described in the present document may be implemented and performed on a processor, a microprocessor, a controller, or a chip. For example, functional units shown in each drawing may be implemented and executed on a computer, a processor, a microprocessor, a controller, or a chip. In this case, information for implementation (e.g., information on instructions) or an algorithm may be stored in a digital storage medium.

In addition, a decoding apparatus and an encoding apparatus to which an embodiment of the present disclosure is applied may be included in a multimedia broadcast transceiver, a mobile communication terminal, a home cinema video device, a digital cinema video device, a surveillance camera, a video chat device, a device for real-time communication such as video communication, a mobile streaming device, a storage medium, a camcorder, a video on demand (VoD) service provision device, an over the top (OTT) video device, an Internet streaming service provision device, a three-dimensional (3D) video device, a virtual reality (VR) device, an augmented reality (AR) device, a videotelephony video device, a terminal for a transportation means (e.g., a vehicle (including an autonomous driving vehicle) terminal, an aircraft terminal, a ship terminal, etc.), a medical video device, etc., and may be used for processing video signals or data signals.

For example, the OTT video device may include a game console, a Blu-ray player, an Internet access TV, a home theater system, a smartphone, a tablet personal computer (PC), a digital video recorder (DVR), and the like.

Further, a processing method to which an embodiment of the present specification is applied may be produced in the form of a program executed by a computer, and stored in a computer-readable recording medium. Multimedia data having a data structure according to an embodiment of the present specification may also be stored in the computer-readable recording medium. The computer-readable recording medium includes all kinds of storage devices and distributed storage devices. The computer-readable recording medium may include, for example, a Blu-ray disc (BD), a universal serial bus (USB) device, a ROM, a programmable ROM (PROM), an erasable programmable ROM (EPROM), a RAM, a compact disc (CD)-ROM, magnetic tape, a floppy disk, and an optical data storage device. In addition, the computer-readable recording medium includes a medium implemented in the form of a carrier (e.g., transmission via the Internet). A bitstream generated through an encoding method may be stored in the computer-readable recording medium or transmitted via a wired or wireless communication network.

An embodiment of the present specification may be implemented as a computer program product of program code, and the program code may be performed on a computer according to the embodiment of the present specification. The program code may be stored on a computer-readable carrier.

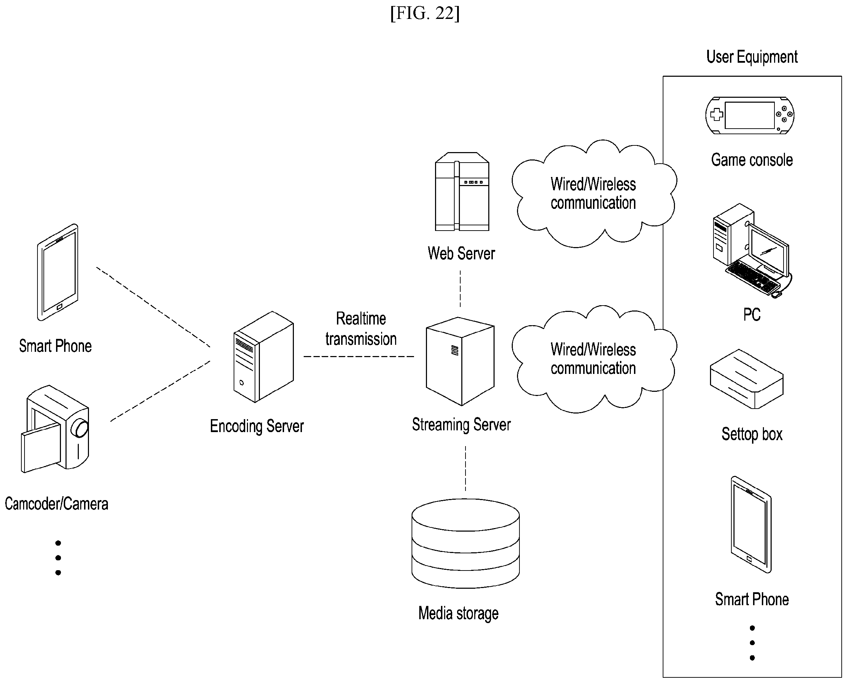

FIG. 22 shows an example of a contents streaming system to which embodiments of the present disclosure may be applied.

Referring to FIG. 22, a contents streaming system to which embodiment(s) of the present disclosure are applied may largely include an encoding server, a streaming server, a web server, a media storage, a user device and a multimedia input device.

The encoding server generates a bitstream by compressing contents input from multimedia input devices such as a smartphone, a camera, a camcorder, etc. into digital data and transmits it to the streaming server. As another example, when multimedia input devices such as a smartphone, a camera, a camcorder, etc. directly generate a bitstream, the encoding server may be omitted.

The bitstream may be generated by an encoding method or a bitstream generation method to which embodiment(s) of the present disclosure are applied, and the streaming server may temporarily store the bitstream in a process of transmitting or receiving the bitstream.

The streaming server transmits multimedia data to a user device based on a user's request through a web server, and the web server serves as a medium to inform a user of what service is available. When a user requests desired service from the web server, the web server delivers it to a streaming server, and the streaming server transmits multimedia data to a user. In this case, the contents streaming system may include a separate control server, and in this case, the control server controls a command/a response between each device in the content streaming system.

The streaming server may receive contents from a media storage and/or an encoding server. For example, when contents is received from the encoding server, the contents may be received in real time. In this case, in order to provide smooth streaming service, the streaming server may store the bitstream for a certain period of time.

An example of the user device may include a mobile phone, a smart phone, a laptop computer, a digital broadcasting terminal, a personal digital assistants (PDAs), a portable multimedia players (PMP), a navigation, a slate PC, a Tablet PC, an ultrabook, a wearable device (e.g., a smartwatch, a smart glass, a head mounted display (HMD), a digital TV, a desktop, a digital signage, etc.

Each server in the contents streaming system may be operated as a distributed server, and in this case, data received from each server may be distributed and processed.

The claims set forth herein may be combined in various ways. For example, a technical characteristic of a method claim of the present disclosure may be combined and implemented as a device, and a technical characteristic of a device claim of the present disclosure may be combined and implemented as a method. In addition, a technical characteristic of a method claim of the present disclosure and a technical characteristic of a device claim may be combined and implemented as a device, and a technical characteristic of a method claim of the present disclosure and a technical characteristic of a device claim may be combined and implemented as a method.

[Industrial Applicability]

The embodiments of the present disclosure may be used to encode or decode an image.

**Claims**

1. An image decoding method performed by a decoding apparatus, the image decoding method comprising:

    generating a prediction block of a current block based on a prediction mode of the current block;

generating a reconstructed sample the current block based on the prediction block; and
performing a filtering of the reconstructed sample,
wherein the generating the prediction block comprises:

deriving a regular prediction block of the current block;
deriving multiple reference blocks of the current block; and
generating a final prediction block of the current block by a weighted sum of the regular prediction block and the multiple reference blocks,
wherein a filter strength used for the filtering is determined based on prediction information of the current block, the prediction block or the multiple reference blocks.

2. The image decoding method of claim 1, wherein the prediction information includes information on the prediction mode of the current block, a generating method for the prediction block or the prediction mode of the multiple reference blocks.

3. The image decoding method of claim 1, wherein the filtering includes a deblocking filtering, and wherein, when a pre-determined first condition is satisfied, the filter strength is set to a first value, the first value including a value of 2 or 3.

4. The image decoding method of claim 3, wherein the pre-determined first condition includes a case where the current block or an adjacent block adjacent to the current block is in intra mode, the current block or the adjacent block is in combined inter and intra prediction (CIIP) mode, or the number of blocks in an intra mode among the multiple reference blocks is greater than 0.

5. The image decoding method of claim 4, wherein, when the current block or the adjacent block is in the intra mode, the filter strength is set to the first value.

6. The image decoding method of claim 4, wherein, when the current block or the adjacent block is in the CIIP mode, the filter strength is set to the first value.

7. The image decoding method of claim 4, wherein, when the number of blocks in the intra mode among the multiple reference blocks is greater than 0, the filter strength is set to the first value.

8. The image decoding method of claim 7, wherein the multiple reference blocks are multiple reference blocks being parsed or inherited multiple reference blocks.

9. A method of decoding an image performed by a decoding apparatus, the method comprising:

generating a prediction block a current block based on prediction information obtained a bitstream;
deriving transform coefficients by performing dequantization based on residual information obtained the bitstream;
deriving a residual block by performing inverse transform of the transform coefficients; and
generating a reconstructed sample based on the prediction block and the residual block,
wherein the generating a prediction block comprise:

generating a regular prediction block of the current block;
deriving multiple reference blocks of the current block; and
deriving a final prediction block for a current block by a weighted sum of the regular prediction block and the multiple reference blocks,
wherein whether a sub-block transform (SBT) is applied to the current block is determined based on a prediction mode of the multiple reference blocks.

10. The image decoding method of claim 9, wherein, when the prediction mode of the multiple reference blocks is not in intra mode, an application of the SBT to the current block is determined.

11. The image decoding method of claim 9, wherein, when a pre-determined second condition is satisfied, an application of the SBT to the current block is determined, and wherein the pre-determined second condition includes a case where the number of blocks in an intra mode among the multiple reference blocks is greater than 0.

12. The image decoding method of claim 11, wherein, when the number of blocks in the intra mode among the multiple reference blocks is greater than 0, an application of the SBT to the current block is determined.

13. A method of decoding an image performed by a decoding apparatus, the method comprising:

generating a prediction block a current block based on prediction information obtained a bitstream;
deriving transform coefficients by performing dequantization based on residual information obtained the bitstream;
deriving a residual block by performing an inverse transform of the transform coefficients; and
generating a reconstructed sample based on the prediction block and the residual block,
wherein the generating a prediction block comprise:

generating a regular prediction block of the current block;
deriving multiple reference blocks of the current block; and
deriving a final prediction block for a current block by a weighted sum of the regular prediction block and the multiple reference blocks,
wherein transform kernels used for the inverse transform are determined based on a prediction mode related to at least one of the regular prediction block and the multiple reference blocks.

14. The image decoding method of claim 13, when, the prediction mode of the multiple reference blocks is in an intra mode, a representative intra mode is determined by considering a directionality of each intra mode, and secondary transform kernels of the representative intra mode are determined as the transform kernels used for the inverse transform.

15. The image decoding method of claim 13, wherein, when the prediction mode of the multiple reference blocks is in an intra mode, any one intra mode is selected based on a directionality of each intra mode, and secondary transform kernels of the selected intra mode are determined as the transform kernels used for the inverse transform.

16. The image decoding method of claim 13, wherein, when the prediction mode of the multiple reference blocks is not in an intra mode, an inverse secondary transform is not applied, or kernels of a planar mode are determined as the transform kernels used for the inverse transform.

17. The image decoding method of claim 13, wherein the regular prediction block is derived based on at least one of a regular reference block, and when the prediction mode of at least one of the regular prediction block is in an intra mode, secondary transform kernels of at least one of the regular prediction block are determined as the transform kernels used for the inverse transform.

18. The image decoding method of claim 17, wherein, when the prediction mode of at least one of the regular prediction block is in an intra mode and the prediction mode of the multiple reference blocks is in an intra mode, a representative intra mode is determined by considering a directionality of each intra mode, and secondary transform kernels of the representative intra mode are determined as the transform kernels used for the inverse transform.

19. The image decoding method of claim 13, wherein, when the prediction mode of at least one of the regular prediction block is in an intra mode and the prediction mode of the multiple reference blocks is in an intra mode, secondary transform kernels of the regular prediction block are determined as the transform kernels used for the inverse transform based on that a directionality of each intra mode matches each other.

20. An image encoding method performed by an encoding apparatus, the image encoding method comprising:

generating a prediction block of a current block based on a prediction mode of the current block;
generating a reconstructed sample the current block based on the prediction block; and
performing a filtering of the reconstructed sample,
wherein the generating the prediction block comprises:

deriving a regular prediction block of the current block;
deriving multiple reference blocks of the current block; and

generating a final prediction block of the current block by a weighted sum of the regular prediction block and the multiple reference blocks,
wherein a filter strength used for the filtering is determined based on prediction information of the current block, the prediction block or the multiple reference blocks.

21. A computer-readable digital storage medium for storing a bitstream generated using an image encoding method, the bitstream is generated by generating a prediction block of a current block based on a prediction mode of the current block; generating a reconstructed sample the current block based on the prediction block; and performing a filtering of the reconstructed sample, and
wherein the generating the prediction block comprises:

deriving a regular prediction block of the current block;
deriving multiple reference blocks of the current block; and
generating a final prediction block of the current block by a weighted sum of the regular prediction block and the multiple reference blocks,
wherein a filter strength used for the filtering is determined based on prediction information of the current block, the prediction block or the multiple reference blocks.

22. A method of transmitting data of an image, the method comprising:

generating a bitstream of the image, the bitstream is generated by generating a prediction block of a current block based on a prediction mode of the current block; generating a reconstructed sample the current block based on the prediction block; and performing a filtering of the reconstructed sample, and
transmitting the data including the bitstream,
wherein the generating the prediction block comprises:

deriving a regular prediction block of the current block;
deriving multiple reference blocks of the current block; and
generating a final prediction block of the current block by a weighted sum of the regular prediction block and the multiple reference blocks,
wherein a filter strength used for the filtering is determined based on prediction information of the current block, the prediction block or the multiple reference blocks.

[FIG. 1]

| SOURCE DEVICE | RECEIVING DEVICE |
|---|---|
| VIDEO SOURCE | RENDERER |
| ↓ | ↑ |
| ENCODING APPARATUS | DECODING APPARATUS |
| ↓ | ↑ |
| TRANSMITTER | → RECEIVER |

[FIG. 2]

ENCODING APPARATUS 200

INPUT IMAGE (PICTURE) → IMAGE PARTITIONER 210

230

231 + − → TRANSFORMER 232 → QUANTIZER 233 → ENTROPY ENCODER 240 → BITSTREAM

270 — DPB

INTER PREDICTOR (221)

INTRA PREDICTOR (222)

220

MEMORY

260 — FILTER

250 +

INVERSE TRANSFORMER 235 ← DEQUANTIZER 234

EP 4 779 973 A1

44

[FIG. 3]

DECODING APPARATUS 300

BITSTREAM → ENTROPY DECODER 310 → DEQUANTIZER 321 → INVERSE TRANSFORMER 322 (320) → + 340 → FILTER 350 → RECONSTRUCTED IMAGE (PICTURE)

INTRA PREDICTOR 331

INTER PREDICTOR 332 (330)

MEMORY

DPB 360

EP 4 779 973 A1

45

[FIG. 4]

Residual samples
(A) → | Primary Transform (MTS based) | → Transform coefficients (B) → | Secondary Transform (LFNST based) | → Transform coefficients (C)

Transformer (232)

Transform coefficients
(C') → | (inverse) Secondary Transform (LFNST based) | → Transform coefficients (B') → | (inverse) Primary Transform (MTS based) | → Residual samples (A')

Inverse Transformer (235) or (322)

EP 4 779 973 A1

[FIG. 5]

```
┌─────────────────────────────────┐
│   GENERATE PREDICTION SAMPLES   │──S500
└─────────────────────────────────┘
                │
                ▼
┌─────────────────────────────────┐
│     DERIVE RESIDUAL SAMPLES     │──S510
└─────────────────────────────────┘
                │
                ▼
┌─────────────────────────────────┐
│    ENCODE IMAGE INFORMATION     │──S520
└─────────────────────────────────┘
```

[FIG. 6]

```
┌─────────────────────────────────┐
│    DETERMINE PREDICTION MODE    │──S600
└─────────────────────────────────┘
                │
                ▼
┌─────────────────────────────────┐
│    DERIVE MOTION INFORMATION    │──S610
└─────────────────────────────────┘
                │
                ▼
┌─────────────────────────────────┐
│   GENERATE PREDICTION SAMPLES   │──S620
└─────────────────────────────────┘
                │
                ▼
┌─────────────────────────────────┐
│     DERIVE RESIDUAL SAMPLES     │──S630
└─────────────────────────────────┘
                │
                ▼
┌─────────────────────────────────┐
│ GENERATE RECONSTRUCTED SAMPLES  │──S640
└─────────────────────────────────┘
```

[FIG. 7]

```
┌─────────────────────────────────┐
│ DETERMINE INTER PREDICTION MODE │──S700
└─────────────────────────────────┘
                │
                ▼
┌─────────────────────────────────┐
│    DERIVE MOTION INFORMATION    │──S710
└─────────────────────────────────┘
                │
                ▼
┌─────────────────────────────────┐
│    GENERATE PREDICTION SAMPLE   │──S720
└─────────────────────────────────┘
```

[FIG. 8]

GENERATE BASIC PREDICTION BLOCK — S800

↓

DERIVE ADDITIONAL REFERENCE BLOCK — S810

↓

GENERATE FINAL PREDICTION BLOCK — S820

[FIG. 9]

<ref. block, P0>　　　<Current block, C>　　　<ref. block, P1>

<ref. block, P2>　　　　　　　　　　　　　　　　<ref. block, P3>

[FIG. 10]

[FIG. 11]

[FIG. 12]

[FIG. 13]

[FIG. 14]

(a)                    (b)

[FIG. 15]

[FIG. 16]

Motion vectors of left and above neighboring sub-blocks are usded in OBMC of $P_{N3}$

sub-block $P_{N3}$

Motion vector of above neighboring sub-block is used in OBMC of $P_{N1}$

Motion vectors of four neighboring sub-blocks are used in OBMC of $P_N$

Motion vector of left neighboring sub-block is usded in OBMC of $P_{N2}$

sub-block $P_{N2}$

sub-block $P_{N1}$

PU1

PU2

Current CU

sub-block $P_N$

Current CU

sub-block where OBMC applies

(a). Sub-blocks at CU/ PU boundary

(b). Sub-PUs in ATMVP mode

[FIG. 17]

START

↓

DETERMINE TYPE OF PREDICTION MODE

↓

if(!INTRA) — NO →

↓ YES

PARSE CU_CODED_FLAG

↓

if(!cu_skip_flag) — NO →

↓ YES

PARSE GENERAL_MERGE_FLAG

↓

if(!general_merge_flag) — NO →

↓ YES

| INTER(AMVP) MODE | MERGE MODE | SKIP MODE | INTRA MODE |
|---|---|---|---|
| APPLY MULTI-REFERENCE BLOCK | APPLY MULTI-REFERENCE BLOCK | NOT APPLY MULTI-REFERENCE BLOCK | NOT APPLY MULTI-REFERENCE BLOCK |

if(numMHP == 0) — NO →

↓ YES

| PARSE CU_CODED_FLAG | INFER CU_CODED_FLAG AS VALUE OF 1 | INFER CU_CODED_FLAG AS VALUE OF 0 | INFER CU_CODED_FLAG AS VALUE OF 1 |

↓

END

EP 4 779 973 A1

[FIG. 18]

START

DETERMINE TYPE OF PREDICTION MODE

if(!INTRA) — NO

YES

PARSE CU_CODED_FLAG

if(!cu_skip_flag) — NO

YES

PARSE GENERAL_MERGE_FLAG

if(!general_merge_flag) — NO

YES

| INTER(AMVP) MODE | MERGE MODE | SKIP MODE | INTRA MODE |

| APPLY MULTI-REFERENCE BLOCK | APPLY MULTI-REFERENCE BLOCK | NOT APPLY MULTI-REFERENCE BLOCK | NOT APPLY MULTI-REFERENCE BLOCK |

if(condition) — NO

YES

| PARSE CU_CODED_FLAG | INFER CU_CODED_FLAG AS VALUE OF 1 | INFER CU_CODED_FLAG AS VALUE OF 0 | INFER CU_CODED_FLAG AS VALUE OF 1 |

END

[FIG. 19]

```
        ┌─────────────────────┐
        │   START INTRA CU     │
        └─────────────────────┘
                   │
                   ▼
    ┌───────────────────────────────┐
    │  APPLY MULTI-REFERENCE BLOCK   │
    └───────────────────────────────┘
                   │
                   ▼
              ◇─────────◇
         ◇                   ◇          NO
    ◇        if(condition)        ◇─────────────────┐
         ◇                   ◇                       │
              ◇─────────◇                            │
                   │ YES                             │
                   ▼                                 ▼
    ┌───────────────────────────┐    ┌──────────────────────────────────────┐
    │    PARSE CU_CODED_FLAG     │    │  INFER CU_CODED_FLAG AS VALUE OF 1    │
    └───────────────────────────┘    └──────────────────────────────────────┘
                   │                                 │
                   ▼◄────────────────────────────────┘
        ┌─────────────────────┐
        │    END INTRA CU      │
        └─────────────────────┘
```

[FIG. 20]

EP 4 779 973 A1

[FIG. 21]

[FIG. 22]

## INTERNATIONAL SEARCH REPORT

| International application No. |
|---|
| **PCT/KR2024/013991** |

### A. CLASSIFICATION OF SUBJECT MATTER

**H04N 19/107**(2014.01)i; **H04N 19/105**(2014.01)i; **H04N 19/176**(2014.01)i; **H04N 19/159**(2014.01)i; **H04N 19/117**(2014.01)i; **H04N 19/86**(2014.01)i; **H04N 19/593**(2014.01)i; **H04N 19/124**(2014.01)i; **H04N 19/18**(2014.01)i; **H04N 19/12**(2014.01)i

According to International Patent Classification (IPC) or to both national classification and IPC

### B. FIELDS SEARCHED

Minimum documentation searched (classification system followed by classification symbols)

H04N 19/107(2014.01); H04N 19/105(2014.01); H04N 19/117(2014.01); H04N 19/132(2014.01); H04N 19/176(2014.01); H04N 19/42(2014.01); H04N 19/50(2014.01); H04N 19/577(2014.01); H04N 19/583(2014.01); H04N 19/80(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 예측(predict), 필터(filter), 참조(reference), 가중(weight), 서브 블록 변환(sub-block transform, SBT), 커널(kernel)

### C. DOCUMENTS CONSIDERED TO BE RELEVANT

| Category* | Citation of document, with indication, where appropriate, of the relevant passages | Relevant to claim No. |
|---|---|---|
| X | KR 10-2021-0057187 A (WILUS INSTITUTE OF STANDARDS AND TECHNOLOGY INC. et al.) 20 May 2021 (2021-05-20)<br>See paragraphs [0002], [0033]-[0042], [0073], [0127], [0142]-[0145] and [0270]; claims 1 and 3; and figures 2 and 26. | 9-10,13,15-17,19 |
| Y | | 1-8,11-12,14,18,20-22 |
| Y | KR 10-1826353 B1 (SK TELECOM CO., LTD.) 09 February 2018 (2018-02-09)<br>See paragraphs [0024], [0042], [0070] and [0076]-[0083]; and figure 6. | 1-8,20-22 |
| Y | US 2020-0296416 A1 (ALIBABA GROUP HOLDING LIMITED) 17 September 2020 (2020-09-17)<br>See claim 25. | 11-12 |
| Y | KR 10-2018-0080114 A (IUCF-HYU (INDUSTRY-UNIVERSITY COOPERATION FOUNDATION HANYANG UNIVERSITY)) 11 July 2018 (2018-07-11)<br>See paragraphs [0058] and [0144]. | 14,18 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 December 2024** | **26 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/013991** |

**C.  DOCUMENTS CONSIDERED TO BE RELEVANT**

| Category* | Citation of document, with indication, where appropriate, of the relevant passages | Relevant to claim No. |
| --- | --- | --- |
| A | US 2023-0209060 A1 (MEDIATEK INC.) 29 June 2023 (2023-06-29)<br>See claims 1-9. | 1-22 |

Form PCT/ISA/210 (second sheet) (July 2022)

## INTERNATIONAL SEARCH REPORT
### Information on patent family members

| International application No. |
| --- |
| **PCT/KR2024/013991** |

| Patent document cited in search report | | | Publication date (day/month/year) | Patent family member(s) | | | Publication date (day/month/year) |
| --- | --- | --- | --- | --- | --- | --- | --- |
| KR | 10-2021-0057187 | A | 20 May 2021 | CN | 118301364 | A | 05 July 2024 |
| | | | | EP | 3866468 | A1 | 18 August 2021 |
| | | | | JP | 2023-162362 | A | 08 November 2023 |
| | | | | JP | 7342118 | B2 | 11 September 2023 |
| | | | | US | 12047562 | B2 | 23 July 2024 |
| | | | | US | 2024-0305775 | A1 | 12 September 2024 |
| | | | | WO | 2020-076143 | A1 | 16 April 2020 |
| KR | 10-1826353 | B1 | 09 February 2018 | KR | 10-2012-0010177 | A | 02 February 2012 |
| | | | | WO | 2012-011744 | A2 | 26 January 2012 |
| | | | | WO | 2012-011744 | A3 | 18 May 2012 |
| US | 2020-0296416 | A1 | 17 September 2020 | CN | 113475076 | A | 01 October 2021 |
| | | | | CN | 113475076 | B | 12 March 2024 |
| | | | | CN | 117014634 | A | 07 November 2023 |
| | | | | CN | 117014634 | B | 30 July 2024 |
| | | | | US | 11206425 | B2 | 21 December 2021 |
| | | | | WO | 2020-185427 | A1 | 17 September 2020 |
| KR | 10-2018-0080114 | A | 11 July 2018 | WO | 2018-124850 | A1 | 05 July 2018 |
| US | 2023-0209060 | A1 | 29 June 2023 | CN | 116366836 | A | 30 June 2023 |

Form PCT/ISA/210 (patent family annex) (July 2022)